# EUROPEAN PATENT APPLICATION

(11) **EP 4 832 568 A1**
(43) Date of publication of application: **28.10.2026**
(21) Application number: 25751237.6
(22) Date of filing: 22.01.2025
(51) Int. Cl.: H04W 28/18

(54) **COMMUNICATION METHOD AND APPARATUS, AND RELATED NETWORK ELEMENT**

(30) Priority: 06.02.2024 CN 202410171465
(71) Applicant: Huawei Technologies Co., Ltd., Shenzhen, Guangdong 518129 (CN)
(72) Inventor: ZHANG, Xuefei, Shenzhen, Guangdong 518129 (CN); YAN, Yali, Shenzhen, Guangdong 518129 (CN); WEI, Xinpeng, Shenzhen, Guangdong 518129 (CN); GAO, Guojuan, Shenzhen, Guangdong 518129 (CN); ZHANG, Chi, Shenzhen, Guangdong 518129 (CN)
(74) Representative: Huawei European IPR
(86) International application number: PCT/CN2025/073908
(87) International publication number: WO 2025/167635

(57) **Abstract**

This application discloses a communication method and apparatus, and a related network element, and relates to the field of communication technologies. In this application, it may be considered that an SMF assists a UPF in obtaining bit rate authorization information delivered by an AF. In this way, the UPF may dynamically adjust and effectively manage and control, based on the bit rate authorization information delivered by the AF, bit rate information corresponding to target application data, ensure that the bit rate information corresponding to the target application data is within the bit rate authorization information, and then send the target application data to a terminal device, so that the UPF has capabilities of dynamically adjusting and effectively managing and controlling a bit rate of application data. In addition, the bit rate authorization information is delivered to the UPF with assistance of the SMF, so that the UPF performs authentication for application layer bit rate authorization based on the bit rate authorization information, thereby reducing a delay of authentication for application layer bit rate authorization in comparison with performing authentication for application layer bit rate authorization by an application server.

## Description

This application claims priority to Chinese Patent Application No. 202410171465.7, filed with the China National Intellectual Property Administration on February 6, 2024 and entitled "COMMUNICATION METHOD AND APPARATUS, AND RELATED NETWORK ELEMENT", which is incorporated herein by reference in its entirety.

### TECHNICAL FIELD

This application relates to the field of communication technologies, and in particular, to a communication method and apparatus, and a related network element.

### BACKGROUND

In a process in which users request application data or application servers deliver the application data, access network devices and core network devices play important roles in a communication system, and jointly participate in processing related to the application data, for example, scheduling, forwarding, caching, or discarding of the application data.

However, as factors such as user requirements, network congestion statuses, network configurations, or subscription information change, bit rates of the application data may need to be dynamically adjusted and effectively managed and controlled with joint participation of the access network devices and the core network devices.

### SUMMARY

According to a first aspect, this application provides a communication method, applied to a first communication apparatus, and including:
receiving bit rate authorization information from an SMF network element, where the bit rate authorization information refers to bit rate information allowed to be used by a terminal device to access an application; and
sending target application data to the terminal device based on the bit rate authorization information, where bit rate information corresponding to the target application data is within the bit rate authorization information.

It can be learned that, in this embodiment, it is considered that the SMF assists the first communication apparatus in obtaining the bit rate authorization information delivered by an AF. In this way, the first communication apparatus may dynamically adjust and effectively manage and control, based on the bit rate authorization information delivered by the AF, the bit rate information corresponding to the target application data, and ensure that the bit rate information corresponding to the target application data is within the bit rate authorization information, so that the first communication apparatus has capabilities of dynamically adjusting and effectively managing and controlling a bit rate of application data. In addition, the bit rate authorization information is delivered to the first communication apparatus with assistance of the SMF, so that the first communication apparatus performs authentication for application layer bit rate authorization based on the bit rate authorization information, thereby reducing a delay of authentication for application layer bit rate authorization in comparison with performing authentication for application layer bit rate authorization by an application server.

In some possible examples, the first communication apparatus may be a UPF, a chip, a chip component, or the like. In this case, the SMF assists the UPF in obtaining the bit rate authorization information delivered by the AF, so that the UPF may dynamically adjust and effectively manage and control, based on the bit rate authorization information delivered by the AF, the bit rate information corresponding to the target application data, and ensure that the bit rate information corresponding to the target application data is within the bit rate authorization information. Therefore, the UPF has the capabilities of dynamically adjusting and effectively managing and controlling the bit rate of the application data.

In some possible examples, the bit rate authorization information includes at least one of the following: a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

It should be noted that, for the maximum bit rate allowed to be used by the terminal device to access the application, after the terminal device successfully registers with the application server, the application server usually sets the maximum bit rate allowed to be used by the terminal device to access the application. In this way, in a process in which the terminal device requests the application data from the application server, the application server may select a bit rate from the maximum bit rate allowed to be used by the terminal device to access the application and a bit rate lower than the maximum bit rate, and provide the application data at the selected bit rate for the terminal device.

For the bit rate list allowed to be used by the terminal device to access the application, after the terminal device successfully registers with the application server, the application server usually sets the bit rate list allowed to be used by the terminal device to access the application. In this way, in a process in which the terminal device requests the application data from the application server, the application server may select a bit rate from the bit rate list allowed to be used by the terminal device to access the application, and provide the application data at the selected bit rate for the terminal device.

For the bit rate information allowed to be used by the terminal device to access the application within the preset time period, the application server may set, based on different time periods, the bit rate information (for example, a maximum bit rate or a bit rate list) allowed to be used by the terminal device to access the application. For example, within a time period (for example, nighttime) in which a quantity of users accessing the application is smaller, because a quantity of terminal devices accessing the application server within this time period is usually smaller, bandwidth resource utilization is lower, a congestion rate presented by a network status is lower, or the like. Therefore, the application server may set a larger maximum bit rate or more bit rates that can be selected from the bit rate list allowed to be used by the terminal device to access the application within this time period. However, within a time period (for example, daytime) in which a quantity of users accessing the application is larger, because a quantity of terminal devices accessing the application server within this time period is usually larger, bandwidth resource utilization is higher, a congestion rate presented by a network status is higher, or the like. Therefore, the application server may set a smaller maximum bit rate or fewer bit rates that can be selected from the bit rate list allowed to be used by the terminal device to access the application within this time period. In this way, the bit rate information allowed to be used by the terminal device to access the application is flexibly set based on the time periods.

For the bit rate information allowed to be used by the terminal device to access the application within the preset location area, the application server may set, based on different location areas, the bit rate information (for example, a maximum bit rate or a bit rate list) allowed to be used by the terminal device to access the application. For example, within a densely populated location area (for example, a commercial district), because a quantity of terminal devices accessing the application server within this location area is usually large, bandwidth resource utilization is high, a congestion rate presented by a network status is high, or the like. Therefore, the application server may set a small maximum bit rate or a few bit rates that can be selected from the bit rate list allowed to be used by the terminal device to access the application within this location area.

In some possible examples, the bit rate authorization information is carried in an N4 session establishment request message or an N4 session modification request message.

It should be noted that an N4 session establishment procedure is used for creating an initial N4 session context for a PDU session at the UPF. The SMF assigns a new N4 session ID, provides the new N4 session ID for the UPF, and sends the N4 session establishment request message to the UPF. Therefore, in the N4 session establishment procedure, the SMF may send the bit rate authorization information to the UPF by using the N4 session establishment request message, so that the UPF obtains the bit rate authorization information.

In addition, an N4 session modification procedure is used for updating an N4 session context of an existing PDU session at the UPF, and is performed between the SMF and the UPF when a PDU session-related parameter needs to be modified. The SMF sends the N4 session modification request message to the UPF. Therefore, in the N4 session establishment procedure, the SMF may send the bit rate authorization information to the UPF by using the N4 session modification request message, so that the UPF obtains the bit rate authorization information.

In some possible examples, before the sending the target application data bit rate authorization information to the terminal device based on the bit rate authorization information, the method further includes: obtaining application data request information of the terminal device.

It should be noted that, after the UPF obtains the bit rate authorization information, the terminal device may request content of the application data needed by the terminal device, for example, request a video, an image, music, or another media resource. The application data request information of the terminal device may be generated based on a user operation or internal logic of the application, to satisfy a user requirement and obtain the needed application data. In this way, the UPF may obtain the application data request information of the terminal device.

In some possible examples, the obtaining the application data request information of the terminal device includes: receiving the application data request information of the terminal device from an access network device.

It should be noted that the terminal device may request the application data by using an application layer message, and the application data request information of the terminal device is forwarded to the UPF via a RAN, so that the UPF obtains the application data request information of the terminal device. Finally, the UPF processes the application data request information of the terminal device based on the bit rate authorization information, and sends the application data to the terminal device.

In some possible examples, the obtaining the application data request information of the terminal device includes: receiving the application data request information from the SMF.

It should be noted that the terminal device may request the application data by using a control plane message, and the application data request information of the terminal device is forwarded to the UPF via an AMF and the SMF, so that the UPF obtains the application data request information of the terminal device. Finally, the UPF processes the application data request information of the terminal device based on the bit rate authorization information, and sends the application data to the terminal device.

In some possible examples, the application data request information includes the target application data requested by the terminal device. The sending the target application data to the terminal device based on the bit rate authorization information includes:
in response to the application data request information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, where the subscription request message is used for requesting to subscribe to the target application data from the application server.

It should be noted that, if the application data request information includes the target application data requested by the terminal device, the UPF may determine, from the bit rate authorization information in response to the application data request information, the bit rate information corresponding to the target application data. In other words, when a user does not specify a bit rate corresponding to the application data, the UPF may select a bit rate from the bit rate authorization information. In this way, the UPF may perform, based on the bit rate authorization information, authentication for application layer bit rate authorization on the target application data requested by the terminal device, thereby reducing the delay of authentication for application layer bit rate authorization. In addition, the UPF may determine, based on a local cache status or historical application data subscription information, whether the UPF needs to subscribe to the application data from the application server, and may provide the target application data for the terminal device. This avoids a case in which the application server directly delivers the target application data to the terminal device, thereby reducing a delay needed for overall transmission of the target application data, and reducing egress bandwidth pressure, of the application server, in a case in which the terminal device requests the target application data (especially the target application data at a high bit rate) from the application server.

In some possible examples, the application data request information includes the target application data requested by the terminal device and bit rate information requested by the terminal device.

The sending the target application data to the terminal device based on the bit rate authorization information includes:
if the bit rate information requested by the terminal device is within the bit rate authorization information, using, as the bit rate information corresponding to the target application data, the bit rate information requested by the terminal device; or
if the bit rate information requested by the terminal device is not within the bit rate authorization information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, where the subscription request message is used for requesting to subscribe to the target application data from the application server.

It should be noted that, if the application data request information includes the target application data requested by the terminal device and the bit rate information requested by the terminal device, the UPF needs to determine, based on the bit rate authorization information, whether the bit rate information requested by the terminal device can be authorized. When the bit rate information requested by the terminal device is within the bit rate authorization information, it indicates that the bit rate information requested by the terminal device can be authorized, and the bit rate information requested by the terminal device is used as the bit rate information actually corresponding to the target application data. When the bit rate information requested by the terminal device is not within the bit rate authorization information, it indicates that the bit rate information requested by the terminal device cannot be authorized, and the UPF needs to determine, from the bit rate authorization information, the bit rate information actually corresponding to the target application data. In addition, the UPF may determine, based on a local cache status or historical application data subscription information, whether the UPF needs to subscribe to the application data from the application server, and may provide the target application data for the terminal device. This avoids a case in which the application server directly delivers the target application data to the terminal device, thereby reducing a delay needed for overall transmission of the target application data, and reducing egress bandwidth pressure, of the application server, in a case in which the terminal device requests the target application data (especially the target application data at a high bit rate) from the application server.

In some possible examples, the sending the target application data to the terminal device based on the subscription request message includes:
sending the subscription request message to the application server;
receiving the target application data from the application server; and
sending the target application data to the terminal device.

It should be noted that the UPF may send the subscription request message to the application server to request the target application data. In this way, the application server obtains, by using the subscription request message, the application data that the UPF needs to subscribe to and the bit rate information corresponding to the application data, and sends the target application data to the UPF.

In some possible examples, the receiving the target application data from the application server includes:
receiving a subscription response message from the application server, where the subscription response message includes a bit rate identifier ID;
recording and maintaining a correspondence between the target application data and the bit rate ID; and
receiving the target application data from the application server based on the bit rate ID.

It should be noted that, before sending the target application data, the application server may send the bit rate ID to the UPF, so that the UPF may record and maintain the correspondence between the target application data and the bit rate ID, and the correspondence is cached locally. Then, the application server may send the target application data based on the bit rate ID, and the UPF may receive the target application data based on the bit rate ID.

In some possible examples, before the sending the target application data to the terminal device, the method further includes:
sending the bit rate information corresponding to the target application data to the terminal device.

It should be noted that, when the terminal device does not request the bit rate information corresponding to the target application data, the UPF may determine, based on the bit rate authorization information, the bit rate information corresponding to the target application data, and then notify the terminal device of the bit rate information. When the terminal device requests the bit rate information corresponding to the target data, because the actual bit rate information determined by the UPF based on the bit rate authorization information may be different from the bit rate information requested by the terminal device, before the UPF sends the application data to the terminal device, the UFP needs to notify the terminal device of the actual bit rate information in advance.

According to a second aspect, this application provides a communication method, applied to a second communication apparatus, and including:
in response to a PDU session establishment request or a PDU session modification request, obtaining bit rate authorization information delivered by an application function AF network element, where the bit rate authorization information refers to bit rate information allowed to be used by a terminal device to access an application; and
sending the bit rate authorization information to a UPF.

It should be noted that in response to the PDU session establishment request or the PDU session modification request may be understood as that after receiving the PDU session establishment/modification request, the second communication apparatus may check local configuration information or subscription information. The local configuration information or the subscription information may include indication information indicating to obtain the bit rate authorization information after the second communication apparatus receives the PDU session establishment request or the PDU session modification request. For example, the indication information may indicate that the second communication apparatus may need to obtain bit rate authorization information for a user of a specific slice or data network name (data network name, DNN). In this way, the second communication apparatus may trigger, based on the local configuration information or the subscription information, a procedure of obtaining the bit rate authorization information delivered by the AF.

It can be learned that the second communication apparatus may obtain, in a procedure for requesting PDU session establishment or PDU session modification, the bit rate authorization information delivered by the AF, and then send the bit rate authorization information to the UPF. In this way, the second communication apparatus assists, in the procedure for requesting PDU session establishment or PDU session modification, the UPF in obtaining the bit rate authorization information.

In some possible examples, the second communication apparatus may be an SMF, a chip, a chip component, or the like. In this case, the SMF may obtain, in the procedure for requesting PDU session establishment or PDU session modification, the bit rate authorization information delivered by the AF, and then send the bit rate authorization information to the UPF. In this way, the SMF assists, in the procedure for requesting PDU session establishment or PDU session modification, the UPF in obtaining the bit rate authorization information.

In some possible examples, the bit rate authorization information includes at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

It should be noted that, for the maximum bit rate allowed to be used by the terminal device to access the application, after the terminal device successfully registers with an application server, the application server usually sets the maximum bit rate allowed to be used by the terminal device to access the application. In this way, in a process in which the terminal device requests application data from the application server, the application server may select a bit rate from the maximum bit rate allowed to be used by the terminal device to access the application and a bit rate lower than the maximum bit rate, and provide the application data at the selected bit rate for the terminal device.

For the bit rate list allowed to be used by the terminal device to access the application, after the terminal device successfully registers with an application server, the application server usually sets the bit rate list allowed to be used by the terminal device to access the application. In this way, in a process in which the terminal device requests application data from the application server, the application server may select a bit rate from the bit rate list allowed to be used by the terminal device to access the application, and provide the application data at the selected bit rate for the terminal device.

For the bit rate information allowed to be used by the terminal device to access the application within the preset time period, an application server may set, based on different time periods, the bit rate information (for example, a maximum bit rate or a bit rate list) allowed to be used by the terminal device to access the application. For example, within a time period (for example, nighttime) in which a quantity of users accessing the application is smaller, because a quantity of terminal devices accessing the application server within this time period is usually smaller, bandwidth resource utilization is lower, a congestion rate presented by a network status is lower, or the like. Therefore, the application server may set a larger maximum bit rate or more bit rates that can be selected from the bit rate list allowed to be used by the terminal device to access the application within this time period. However, within a time period (for example, daytime) in which a quantity of users accessing the application is larger, because a quantity of terminal devices accessing the application server within this time period is usually larger, bandwidth resource utilization is higher, a congestion rate presented by a network status is higher, or the like. Therefore, the application server may set a smaller maximum bit rate or fewer bit rates that can be selected from the bit rate list allowed to be used by the terminal device to access the application within this time period. In this way, the bit rate information allowed to be used by the terminal device to access the application is flexibly set based on the time periods.

For the bit rate information allowed to be used by the terminal device to access the application within the preset location area, an application server may set, based on different location areas, the bit rate information (for example, a maximum bit rate or a bit rate list) allowed to be used by the terminal device to access the application. For example, within a densely populated location area (for example, a commercial district), because a quantity of terminal devices accessing the application server within this location area is usually large, bandwidth resource utilization is high, a congestion rate presented by a network status is high, or the like. Therefore, the application server may set a small maximum bit rate or a few bit rates that can be selected from the bit rate list allowed to be used by the terminal device to access the application within this location area.

In some possible examples, the obtaining the bit rate authorization information delivered by the AF includes:
sending a first request message to an NEF, where the first request message is used for requesting the NEF to query a UDR for the bit rate authorization information delivered by the AF; and
receiving a first response message from the NEF, where the first response message includes the bit rate authorization information.

It should be noted that the SMF may request, from the NEF, the bit rate authorization information delivered by the AF, the NEF queries the UDR for the bit rate authorization information delivered by the AF, the UDR returns the bit rate authorization information to the NEF, and the NEF returns the bit rate authorization information to the SMF. In this way, the SMF obtains the bit rate authorization information delivered by the AF.

In some possible examples, the obtaining the bit rate authorization information delivered by the AF includes:
sending a second request message to a PCF, where the second request message is used for requesting the PCF to query a UDR for the bit rate authorization information delivered by the AF; and
receiving a second response message from the PCF, where the second response message includes the bit rate authorization information.

It should be noted that the SMF may request a PDU session policy from the PCF, the PCF may determine, based on local configuration information or subscription information, that the PCF needs to obtain the bit rate authorization information delivered by the AF, the PCF queries the UDR for the bit rate authorization information delivered by the AF, the UDR returns the bit rate authorization information to the PCF, and the PCF delivers the bit rate authorization information to the SMF. The local configuration information or the subscription information may include indication information indicating to obtain the bit rate authorization information after the PCF receives a PDU session policy request of the SMF. For example, the indication information may indicate that the PCF needs to obtain bit rate authorization information for a user of a specific slice or DNN.

In some possible examples, before the obtaining the bit rate authorization information delivered by the AF, the method further includes:
receiving an SM context request message or an SM context update request message from an AMF, where the SM context request message or the SM context update request message includes application data request information of the terminal device.

It should be noted that the terminal device may request the application data by using a control plane message, and the application data request information of the terminal device is forwarded to the UPF via the AMF and the SMF. Based on this, in a PDU session establishment procedure, the terminal device sends the PDU session establishment request message to the AMF, where the PDU session establishment request message includes the application data request information of the terminal device. Then, the AMF sends the SM context request message to the SMF, where the SM context request message includes the application data request information, so that the SMF obtains the application data request information of the terminal device.

In a PDU session modification procedure, the terminal device sends the PDU session modification request message to the AMF, where the PDU session modification request message includes the application data request information of the terminal device. Then, the AMF sends the SM context update request message to the SMF, where the SM context update request message includes the application data request information, so that the SMF obtains the application data request information of the terminal device.

In some possible examples, the sending the bit rate authorization information to the UPF includes:
if the SM context request message includes the application data request information, sending an N4 session establishment request message to the UPF, where the N4 session establishment request message includes the application data request information; or
if the SM context update request message includes the application data request information, sending an N4 session modification request message to the UPF, where the N4 session modification request message includes the application data request information.

It should be noted that, in the PDU session establishment procedure, the terminal device sends the PDU session establishment request message to the AMF, where the PDU session establishment request message includes the application data request information of the terminal device. Then, the AMF sends the SM context request message to the SMF, where the SM context request message includes the application data request information. Finally, the SMF sends the N4 session establishment request message to the UPF, where the N4 session establishment request message includes the application data request information. In this way, the SMF delivers the application data request information to the UPF.

In the PDU session modification procedure, the terminal device sends the PDU session modification request message to the AMF, where the PDU session modification request message includes the application data request information of the terminal device. Then, the AMF sends the SM context update request message to the SMF, where the SM context update request message includes the application data request information. Finally, the SMF sends the N4 session modification request message to the UPF, where the N4 session modification request message includes the application data request information. In this way, the SMF delivers the application data request information to the UPF.

In some possible examples, the data request information includes target application data requested by the terminal device and/or bit rate information requested by the terminal device.

It should be noted that the terminal device may request content of the target application data needed by the terminal device, for example, request a video, an image, music, or another media resource. A target application data request of the terminal device may be generated based on a user operation or internal logic of the application, to satisfy a user requirement and obtain the needed target application data. In addition, when requesting the target application data, the terminal device may request the bit rate information needed by the terminal device. For example, when selecting a video to play in the application, a user may select a bit rate of 1080 kbps for the video, or adjust a bit rate of the video from 720 kbps to 1080 kbps. In this case, the terminal device requests 1080 kbps from the application server.

According to a third aspect, this application provides a communication method, applied to a first communication apparatus, and including:
receiving network congestion information or bandwidth usage information from an access network device, or receiving network performance analytics information from an NWDAF; and
sending target application data to a terminal device based on the network congestion information, the bandwidth usage information, or the network performance analytics information, where bit rate information corresponding to the target application data is within bit rate authorization information, and the bit rate authorization information refers to bit rate information allowed to be used by the terminal device to access an application.

It should be noted that the network congestion information may refer to relevant data for monitoring and managing a network congestion status in a communication process between a RAN and the terminal device. The bandwidth usage information may refer to relevant data for recording and managing network resource usage in the communication process between the RAN and the terminal device. The network performance analytics information refers to data and events that are generated in a network communication process. The data and events may be used for evaluating and analyzing network performance and quality. The network performance analytics information may include bandwidth utilization, a transmission delay, a packet loss rate, data traffic, and the like.

It can be learned that the first communication apparatus may adjust, based on the network congestion information, the bandwidth usage information, or the network performance analytics information, bit rate information corresponding to the target application data, and the adjusted bit rate information is within the bit rate authorization information. Then, the first communication apparatus sends the target application data to the terminal device. In this way, bit rate adjustment is implemented.

In some possible examples, the first communication apparatus may be a UPF, a chip, a chip component, or the like. In this case, the UPF may adjust, based on the network congestion information, the bandwidth usage information, or the network performance analytics information, the bit rate information corresponding to the target application data, and the adjusted bit rate information is within the bit rate authorization information. Then, the UPF sends the target application data to the terminal device. In this way, bit rate adjustment is implemented.

In some possible examples, the bit rate authorization information includes at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

It should be noted that, for the maximum bit rate allowed to be used by the terminal device to access the application, after the terminal device successfully registers with an application server, the application server usually sets the maximum bit rate allowed to be used by the terminal device to access the application. In this way, in a process in which the terminal device requests the application data from the application server, the application server may select a bit rate from the maximum bit rate allowed to be used by the terminal device to access the application and a bit rate lower than the maximum bit rate, and provide the application data at the selected bit rate for the terminal device.

For the bit rate list allowed to be used by the terminal device to access the application, after the terminal device successfully registers with an application server, the application server usually sets the bit rate list allowed to be used by the terminal device to access the application. In this way, in a process in which the terminal device requests the application data from the application server, the application server may select a bit rate from the bit rate list allowed to be used by the terminal device to access the application, and provide the application data at the selected bit rate for the terminal device.

For the bit rate information allowed to be used by the terminal device to access the application within the preset time period, an application server may set, based on different time periods, the bit rate information (for example, a maximum bit rate or a bit rate list) allowed to be used by the terminal device to access the application. For example, within a time period (for example, nighttime) in which a quantity of users accessing the application is smaller, because a quantity of terminal devices accessing the application server within this time period is usually smaller, bandwidth resource utilization is lower, a congestion rate presented by a network status is lower, or the like. Therefore, the application server may set a larger maximum bit rate or more bit rates that can be selected from the bit rate list allowed to be used by the terminal device to access the application within this time period. However, within a time period (for example, daytime) in which a quantity of users accessing the application is larger, because a quantity of terminal devices accessing the application server within this time period is usually larger, bandwidth resource utilization is higher, a congestion rate presented by a network status is higher, or the like. Therefore, the application server may set a smaller maximum bit rate or fewer bit rates that can be selected from the bit rate list allowed to be used by the terminal device to access the application within this time period. In this way, the bit rate information allowed to be used by the terminal device to access the application is flexibly set based on the time periods.

For the bit rate information allowed to be used by the terminal device to access the application within the preset location area, an application server may set, based on different location areas, the bit rate information (for example, the maximum bit rate or the bit rate list) allowed to be used by the terminal device to access the application. For example, within a densely populated location area (for example, a commercial district), because a quantity of terminal devices accessing the application server within this location area is usually large, bandwidth resource utilization is high, a congestion rate presented by a network status is high, or the like. Therefore, the application server may set a small maximum bit rate or a few bit rates that can be selected from the bit rate list allowed to be used by the terminal device to access the application within this location area.

In some possible examples, the sending the target application data to the terminal device based on the network congestion information, the bandwidth usage information, or the network performance analytics information includes:
determining, from the bit rate authorization information based on the network congestion information, the bandwidth usage information, or the network performance analytics information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, where the subscription request message is used for requesting to subscribe to the target application data from the application server.

It should be noted that the UPF may adjust, based on the network congestion information, the bandwidth usage information, or the network performance analytics information, the bit rate information corresponding to the target application data, and the adjusted bit rate information is within the bit rate authorization information. In addition, the UPF may determine, based on a local cache status or historical application data subscription information, whether the UPF needs to subscribe to the target application data from the application server, and may provide the target application data for the terminal device. This avoids a case in which the application server directly delivers the target application data to the terminal device, thereby reducing a delay needed for overall transmission of the target application data, and reducing egress bandwidth pressure, of the application server, in a case in which the terminal device requests the target application data (especially the target application data at a high bit rate) from the application server.

In some possible examples, the sending the target application data to the terminal device based on the subscription request message includes:
sending the subscription request message to the application server;
receiving the target application data from the application server; and
sending the target application data to the terminal device.

It should be noted that the UPF may send the subscription request message to the application server to request the target application data. In this way, the application server obtains, by using the subscription request message, the application data that the UPF needs to subscribe to and the bit rate information corresponding to the application data, and sends the target application data to the UPF.

In some possible examples, the receiving the target application data from the application server includes:
receiving a bit rate identifier ID from the application server;
recording and maintaining a correspondence between the target application data and the bit rate ID; and
receiving the target application data from the application server based on the bit rate ID.

It should be noted that, before sending the target application data, the application server may send the bit rate ID to the UPF, so that the UPF may record and maintain the correspondence between the target application data and the bit rate ID, and the correspondence is cached locally. Then, the application server may send the target application data based on the bit rate ID, and the UPF may receive the target application data based on the bit rate ID.

In some possible examples, before the sending the target application data to the terminal device, the method further includes:
sending the bit rate information corresponding to the target application data to the terminal device.

It should be noted that, when the terminal device does not request bit rate information corresponding to the target application data, the UPF may determine, based on the bit rate authorization information, the bit rate information corresponding to the target application data, and then notify the terminal device of the bit rate information. When the terminal device requests bit rate information corresponding to the target data, because the actual bit rate information determined by the UPF based on the bit rate authorization information may be different from the bit rate information requested by the terminal device, before the UPF sends the application data to the terminal device, the UFP needs to notify the terminal device of the actual bit rate information in advance.

In some possible examples, before the sending the target application data to the terminal device based on the network congestion information, the bandwidth usage information, or the network performance analytics information, the method further includes:
receiving the bit rate authorization information from an SMF network element.

In this way, the SMF assists the UPF in obtaining the bit rate authorization information delivered by an AF, so that the UPF may dynamically adjust and effectively manage and control, based on the bit rate authorization information delivered by the AF, the bit rate information corresponding to the target application data, and ensure that the bit rate information corresponding to the target application data is within the bit rate authorization information. Therefore, the UPF has capabilities of dynamically adjusting and effectively managing and controlling a bit rate of application data.

In some possible examples, the bit rate authorization information is carried in an N4 session establishment request message or an N4 session modification request message.

It should be noted that an N4 session establishment procedure is used for creating an initial N4 session context for a PDU session at the UPF. The SMF assigns a new N4 session ID, provides the new N4 session ID for the UPF, and sends the N4 session establishment request message to the UPF. Therefore, in the N4 session establishment procedure, the SMF may send the bit rate authorization information to the UPF by using the N4 session establishment request message, so that the UPF obtains the bit rate authorization information.

In addition, an N4 session modification procedure is used for updating an N4 session context of an existing PDU session at the UPF, and is performed between the SMF and the UPF when a PDU session-related parameter needs to be modified. The SMF sends the N4 session modification request message to the UPF. Therefore, in the N4 session establishment procedure, the SMF may send the bit rate authorization information to the UPF by using the N4 session modification request message, so that the UPF obtains the bit rate authorization information.

According to a fourth aspect, this application provides a communication apparatus, including:
a receiving unit, configured to receive bit rate authorization information from an SMF, where the bit rate authorization information refers to bit rate information allowed to be used by a terminal device to access an application; and
a sending unit, configured to send target application data to the terminal device based on the bit rate authorization information, where bit rate information corresponding to the target application data is within the bit rate authorization information.

It should be noted that, for beneficial effects brought by the technical solution in the fourth aspect, refer to the technical effects brought by the technical solution in the first aspect. Details are not described herein again.

According to a fifth aspect, this application provides a communication apparatus, including:
an obtaining unit, configured to: in response to a PDU session establishment request or a PDU session modification request, obtain bit rate authorization information delivered by an AF, where the bit rate authorization information refers to bit rate information allowed to be used by a terminal device to access an application; and
a sending unit, configured to send the bit rate authorization information to a UPF.

It should be noted that, for beneficial effects brought by the technical solution in the fifth aspect, refer to the technical effects brought by the technical solution in the second aspect. Details are not described herein again.

According to a sixth aspect, this application provides a communication apparatus, including:
a receiving unit, configured to receive network congestion information or bandwidth usage information from an access network device, or receive network performance analytics information from an NWDAF; and
a sending unit, configured to send target application data to a terminal device based on the network congestion information, the bandwidth usage information, or the network performance analytics information, where bit rate information corresponding to the target application data is within bit rate authorization information, and the bit rate authorization information refers to bit rate information allowed to be used by the terminal device to access an application.

It should be noted that, for beneficial effects brought by the technical solution in the sixth aspect, refer to the technical effects brought by the technical solution in the third aspect. Details are not described herein again.

According to a seventh aspect, this application provides a UPF, including a processor, a memory, and a computer program or instructions stored in the memory, where the processor executes the computer program or the instructions to implement the steps in the method designed in the first aspect or the third aspect.

It should be noted that, for beneficial effects brought by the technical solution in the seventh aspect, refer to the technical effects brought by the technical solution in the first aspect or the third aspect. Details are not described herein again.

According to an eighth aspect, this application provides an SMF, including a processor, a memory, and a computer program or instructions stored in the memory, where the processor executes the computer program or the instructions to implement the steps in the method designed in the second aspect.

It should be noted that, for beneficial effects brought by the technical solution in the eighth aspect, refer to the technical effects brought by the technical solution in the second aspect. Details are not described herein again.

According to a ninth aspect, this application provides a chip, including a processor, where the processor performs the steps in the method designed in the first aspect, the second aspect, or the third aspect.

Optionally, the chip further includes a communication interface, and the processor performs, by using the communication interface, the sending step and/or the receiving step in the method designed in the first aspect, the second aspect, or the third aspect.

According to a tenth aspect, this application provides a chip assembly, including a chip, where the chip includes a processor, and the processor performs the steps in the method designed in the first aspect, the second aspect, or the third aspect.

Optionally, the chip assembly further includes a transceiver component, and the processor performs, by using the transceiver component, the sending step and/or the receiving step in the method designed in the first aspect, the second aspect, or the third aspect.

According to an eleventh aspect, this application provides a computer-readable storage medium, storing a computer program or instructions. When the computer program or the instructions are executed, the steps in the method designed in the first aspect, the second aspect, or the third aspect are implemented. For example, the computer program or the instructions are executed by a processor.

According to a twelfth aspect, this application provides a computer program product, including a computer program or instructions. When the computer program or the instructions are executed, the steps in the method designed in the first aspect, the second aspect, or the third aspect are performed. For example, the computer program or the instructions are executed by a processor.

It should be noted that, for beneficial effects brought by the technical solutions in the ninth aspect to the twelfth aspect, refer to the technical effects brought by the technical solution in the first aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of a communication system for an XR service according to an embodiment of this application;
FIG. 3 is a diagram of an MoQ protocol architecture according to an embodiment of this application;
FIG. 4 is a schematic flowchart of a bit rate authorization information transmission method according to an embodiment of this application;
FIG. 5 is a schematic flowchart of an application data subscription method according to an embodiment of this application;
FIG. 6 is a schematic flowchart of an application data transmission method according to an embodiment of this application;
FIG. 7a to FIG. 7c are a schematic flowchart of another application data transmission method according to an embodiment of this application;
FIG. 8 is a schematic flowchart of an application data request information transmission method according to an embodiment of this application;
FIG. 9 is a schematic flowchart of another application data request information transmission method according to an embodiment of this application;
FIG. 10 is a schematic flowchart of another application data transmission method according to an embodiment of this application;
FIG. 11 is a schematic flowchart of a communication method according to an embodiment of this application;
FIG. 12 is a composition block diagram of functional units of a communication apparatus according to an embodiment of this application;
FIG. 13 is a composition block diagram of functional units of another communication apparatus according to an embodiment of this application;
FIG. 14 is a composition block diagram of functional units of another communication apparatus according to an embodiment of this application;
FIG. 15 is a diagram of a structure of a UPF according to an embodiment of this application;
FIG. 16 is a diagram of a structure of an SMF according to an embodiment of this application; and
FIG. 17 is a diagram of a structure of another UPF according to an embodiment of this application.

### DESCRIPTION OF EMBODIMENTS

It should be understood that the terms such as "first" and "second" in embodiments of this application are intended to distinguish between different objects but do not describe a particular sequence. In addition, the terms "including" and "having" and any variant thereof are intended to cover a non-exclusive inclusion. For example, a process, a method, software, a product, or a device that includes a series of steps or units is not limited to the listed steps or units, but may further include an unlisted step or unit, or may further include another step or unit inherent to the process, the method, the product, or the device.

"Embodiments" in embodiments of this application mean that a particular feature, structure, or characteristic described with reference to embodiments may be included in at least one embodiment of this application. The phrase shown in various locations in the specification may not necessarily mean a same embodiment, and is not an independent or alternative embodiment exclusive from another embodiment. It is explicitly and implicitly understood by a person skilled in the art that embodiments described in the specification may be combined with another embodiment.

In embodiments of this application, "at least one" means one or more, and "a plurality of" means two or more.

"And/or" in embodiments of this application describes an association relationship between associated objects, and indicates that three relationships may exist. For example, A and/or B may indicate the following three cases: Only A exists, both A and B exist, and only B exists. A and B may be singular or plural. The character "/" may indicate an "or" relationship between the associated objects. In addition, the character "/" may indicate a division sign. For example, A/B indicates dividing A by B.

"At least one of the following" or a similar expression thereof in embodiments of this application indicates any combination of these items, including a single item or any combination of a plurality of items. For example, at least one of a, b, or c may indicate the following seven cases: a, b, c, a and b, a and c, b and c, or a, b, and c. Each of a, b, and c may be an element, or may be a set including one or more elements.

In embodiments of this application, "of (of)", "corresponding/relevant (corresponding/relevant)", "corresponding (corresponding)", "associated/related (associated/related)", and "mapped (mapped)" may sometimes be used interchangeably. It should be noted that concepts or meanings expressed by the terms are consistent when differences of the terms are not emphasized.

In embodiments of this application, "network", "system", and the like may be expressed as a same concept, and a communication system is a communication network.

"Connection" in embodiments of this application means various connection manners such as a direct connection or an indirect connection, to implement communication between devices. This is not specifically limited.

The following specifically describes related content in technical solutions in embodiments of this application.

The following specifically describes the communication system in embodiments.

The technical solutions in embodiments of this application may be applied to various wireless communication systems, for example, a long term evolution (long term evolution, LTE) system, a long term evolution-advanced (long term evolution-advanced, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial network, NTN) system, a universal mobile telecommunications system (universal mobile telecommunications system, UMTS), a 6th-generation (6th-Generation, 6G) communication system, or another future communication system.

It should be noted that a user connection quantity supported by a conventional communication system is limited, and is easy to implement. With development of communication technologies, the communication system in this application may not only support the conventional communication system, but also support, for example, device to device (device to device, D2D) communication, machine to machine (machine to machine, M2M) communication, machine type communication (machine type communication, MTC), vehicle-to-vehicle (vehicle-to-vehicle, V2V) communication, vehicle-to-everything (vehicle-to-everything, V2X) communication, or narrowband internet of things (narrowband internet of things, NB-IoT) communication. Therefore, the technical solutions in embodiments of this application may also be applied to the foregoing communication systems.

For example, embodiments of this application may be applied to a beamforming (beamforming) deployment scenario, a carrier aggregation (carrier aggregation, CA) deployment scenario, a dual connectivity (dual connectivity, DC) deployment scenario, or a standalone (standalone, SA) deployment scenario.

For another example, embodiments of this application may be applied to a communication scenario of an unlicensed spectrum. In embodiments of this application, the unlicensed spectrum may also be considered as a shared spectrum. Alternatively, embodiments of this application may be applied to a licensed spectrum. The licensed spectrum may also be considered as a non-shared spectrum.

The following describes a terminal device, an access network device, and a core network device mentioned in embodiments.

The terminal device may be a device having a transceiver function, and may also be referred to as a terminal, user equipment (user equipment, UE), a remote terminal device (remote UE), a relay device (relay UE), an access terminal device, a subscriber unit, a subscriber station, a mobile station, a remote station, a mobile device, a user terminal device, an intelligent terminal device, a wireless communication device, a user agent, or a user apparatus. It should be noted that the relay device is a terminal device that can provide relay forwarding services for another terminal device (including the remote terminal device).

For example, the terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving, a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

For another example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a next-generation communication system (for example, an NR communication system or a 6G communication system), or a terminal device in a future evolved public land mobile network (public land mobile network, PLMN), or the like. This is not specifically limited.

In addition, the terminal device may be deployed on land, including an indoor terminal device, an outdoor terminal device, a handheld terminal device, a wearable terminal device, or a vehicle-mounted terminal device, may be deployed on a water surface (for example, on a ship), or may be deployed in the air (for example, on an airplane, a balloon, or a satellite). The terminal device may include an apparatus having a wireless communication function, for example, a chip system, a chip, or a chip assembly. For example, the chip system may include a chip, or may include another discrete device. The terminal device may be a chip, a chip assembly, an apparatus, a unit, or the like. This is not specifically limited.

To address challenges of wireless broadband technologies and maintain the leading edge of a 3GPP network, the 3GPP standard group formulates a next-generation mobile communication network architecture (next-generation system), which is referred to as a 5G network architecture. The architecture not only supports access to a 5G core network (5G core network, 5GC) by using wireless technologies (such as LTE) defined by the 3GPP standard group, but also supports access to the 5GC by using non-3GPP access technologies through non-3GPP interworking functions (non-3GPP interworking functions, N3IWFs), trusted non-3GPP gateway functions (trusted non-3GPP gateway functions, TNGFs), trusted WLAN interworking functions (trusted WLAN interworking functions, TWIFs), or next-generation access gateways (next-generation packet data gateways, NG-PDGs). Core network functions may be classified into a user plane function (user plane function, UPF) network element and a control plane function (control plane function, CPF) network element. The UPF is mainly responsible for data packet forwarding, quality of service (quality of service, QoS) control, charging information statistics collection, and the like. The CPF is mainly responsible for user registration authentication, mobility management, and delivery of a data packet forwarding policy, a QoS control policy, and other similar information to the UPF, and can be further classified into an access and mobility management function (access and mobility management function, AMF) and a session management function (session management function, SMF).

The access network device may be referred to as a radio access network (radio access network, RAN). The RAN may be a network including a plurality of 5G-RAN nodes, and implements radio physical layer functions, resource scheduling and radio resource management, radio access control, and mobility management functions. The 5G-RAN is connected to a UPF through a user plane interface N3, for transmission of data of a terminal device. The 5G-RAN establishes a control plane signaling connection to an AMF through a control plane interface N2, for implementing functions such as radio access bearer control. The RAN may be any device having a wireless transceiver function, including but not limited to a 5G base station (5G node base, gNB), an evolved NodeB (evolved node base, eNB), a wireless access point (wireless access point, Wi-Fi AP), a worldwide interoperability for microwave access base station (worldwide interoperability for microwave access base station, WiMAX BS), a transmission reception point (transmission reception point, TRP), a wireless relay node, a wireless backhaul node, or the like.

In addition, the access network device may be a device configured to communicate with a terminal device. For example, the access network device may be a base station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved node base, eNB) in an LTE system, may be a radio controller in a cloud radio access network (cloud radio access network, CRAN) scenario, or may be a relay station, an access point, a vehicle-mounted device, a wearable device, an access network device in a future 5G network, an access network device in a future evolved PLMN network, or the like. This is not limited in embodiments of this application.

In NR, functions of an access network device are classified into two parts, which are referred to as central unit (central unit, CU)-distributed unit (distributed unit, DU) split. From a protocol stack perspective, a CU includes an RRC layer and a PDCP layer of an LTE base station, and a DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a function perspective, the CU is mainly responsible for radio resource control and configuration, inter-cell mobility management, bearer management, and the like; and the DU is mainly responsible for scheduling and physical signal generation and sending.

Optionally, the access network device may be a macro base station, a micro base station, a pico base station, a small cell, a relay station, a balloon station, or the like.

The core network device may include network elements that provide various functions. The "network element" may also be referred to as an entity, a device, an apparatus, a module, or the like. This is not specifically limited. In addition, for ease of understanding and description, the description of the "network element" is omitted in some descriptions. For example, a network exposure function (network exposure function, NEF) network element is referred to as an NEF for short. In this case, the "NEF" should be understood as an NEF network element or an NEF entity. Descriptions of same or similar cases are omitted below.

For example, the core network device may include a mobility management entity (mobility management entity, MME), a broadcast/multicast service center (broadcast/multicast service center, BMSC), or the like, or may include a corresponding function entity in a 5G system, for example, a core network control plane (control plane, CP) or user plane (user plan, UP) network function. The core network control plane may also be understood as a core network control plane function (control plane function, CPF) entity.

The following describes various network elements included in the core network device.

An SMF may be responsible for control plane functions for session management of terminal devices, including selection and control of user plane functions (user plane functions, UPFs), internet protocol (internet protocol, IP) address allocation, session QoS management, obtaining of policy and charging control (policy and charging control, PCC) policies, and the like.

A UPF may serve as an anchor point of a protocol data unit (protocol data unit, PDU) session connection, is responsible for data packet filtering, data transmission/forwarding, rate control, charging information generation, and the like for terminal devices, and provides a connection to a data network (data network, DN).

The policy control function (policy control function, PCF) may provide configuration policy information for terminal devices, provide policy information for control plane network elements (for example, the SMF) of a network to manage and control terminal devices, and generate terminal device access and QoS flow control policies.

An AF may interact with network elements in a core network to provide some services. For example, the AF interacts with the PCF to perform service policy control, interacts with an NEF to obtain network capability information or provide application information for the network, and provides data network access point information for the PCF to generate routing information of corresponding data services.

The NEF may be responsible for providing network-related status information for application services.

An authentication server function (Authentication Server Function, AUSF) may be used for implementing authentication for 3GPP and non-3GPP access.

A unified data management (UDM) may be used for 3GPP AKA authentication, user identification, access authorization, registration, mobility, subscription, and SMS management.

A network slice selection function (network slice selection function, NSSF) may determine, based on slice selection assistance information, subscription information, and other similar information of terminal devices, network slice instances that the terminal devices are allowed to access.

A network repository function (network repository function NRF) may be a new function that provides registration and discovery functions, so that network functions (NF) can discover each other and communicate with each other through an API interface.

The unified data management (unified data management, UDM) may be responsible for managing user identifiers, subscription data, authentication data, registration management of serving network elements of users, and the like.

A unified data repository (unified data repository, UDR) may be used for storage and retrieval of subscription data by the UDM, and storage and retrieval of policy data by the PCF.

A network data analytics function (network data analytics function, NWDAF) may provide network analytics services based on request data of network services.

A network slice-specific authentication and authorization function (network slice specific authentication and authorization function, NSSAAF) may be used for providing authentication and authorization for specific network slices.

It should be noted that the terminal device is connected to the access network device in a wireless manner, and the access network device is connected to the core network device in a wireless or wired manner. The access network device and the core network device may be different physical devices that are independent of each other; functions of the core network device and logical functions of the access network device may be integrated into a same physical device; or some functions of the core network device and some functions of the access network device may be integrated into one physical device.

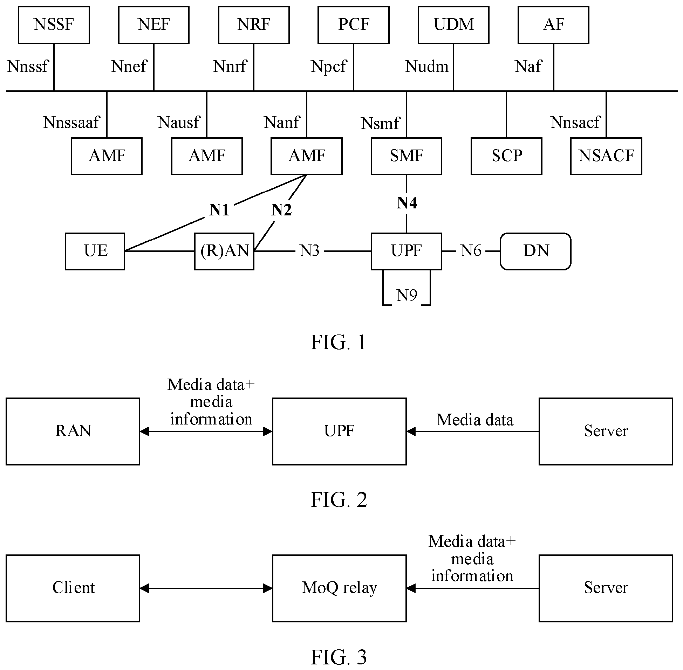

For example, FIG. 1 is a diagram of an architecture of a communication system according to an embodiment of this application. Names of network elements included in FIG. 1 are merely names, and the names do not constitute a limitation on functions of the network elements. In a 5G network and another future network, the foregoing network elements may alternatively have other names. This is not specifically limited. For example, in a 6G network, terms in 5G may be reused for a part or all of the network elements, or other names may be used. This applies throughout and will not be repeated below.

In addition, the network elements in FIG. 1 do not necessarily coexist, and network elements that are needed may be determined based on requirements. A connection relationship between the network elements in FIG. 1 is not uniquely determined, and may be adjusted based on requirements. It may be understood that the foregoing network elements or functions may be network elements in a hardware device, or may be software functions running on dedicated hardware or virtualized functions instantiated on a platform (for example, a cloud platform).

It is clear that FIG. 1 is merely an example of a network architecture of the communication system, and constitutes no limitation on the network architecture of the communication system in embodiments of this application.

In an application data transmission scenario, users request application data from application servers, or application servers delivers the application data to users. The application data may include data of various services, and these services may be delay-sensitive services with a large data amount (for example, an extended reality (extended reality, XR) service).

XR mainly includes virtual-reality interaction technologies such as virtual reality (virtual reality, VR), augmented reality (augmented reality, AR), and mixed reality (mixed reality, MR). XR services are mainly video services. Data of video services exhibits a bursty pattern. That is, data of a same service is periodically generated. Generally, there are 60 frames of video data within one second, and a video frame is generated every 16.6 ms. Data of one video frame is divided into dozens of IP packets due to an excessively large size. For a network that transmits the XR service, dozens of IP data packets need to be transmitted every 16.6 ms. In addition, arrival time of the data packets is uncertain, is approximately within [-4, 4] ms or [-5, 5] ms, and follows a truncated Gaussian distribution.

The following uses VR services as an example to describe the XR services.

VR is a transformative technology that radically transforms content consumption and communication consumption. The VR technology provides more in-depth and immersive experience for users by blocking users' line of sight and immersing users' senses in independent and new virtual space. A terminal device (for example, a wearable VR headset) captures motion information of the users, such as head motions, hand motions, and crouching/standing, and sends the motion information to a cloud application server via a network (for example, an access network device and a core network device). The application server performs rendering based on the motion information of the users to generate images, and sends the images to the terminal device via the communication network for viewing.

In addition, the VR services are periodic. The terminal device may periodically send uplink control packets that include interaction device signals such as a head rotation signal/handle signal, and a period is generally about 2.5 ms to 5 ms. The application server generates a video frame based on a frame rate and sends the video frame to the terminal device over a downlink (for example, if the frame rate is 60 fps, a frame is generated every 16.67 ms).

In a process in which the users request the application data or the application servers deliver the application data, access network devices and core network devices in a communication system need to jointly participate in processing related to the application data.

For example, XR services are used as an example. As shown in FIG. 2, a UPF is responsible for identifying media information, and transmitting the media information to a RAN by using GTP-U. The RAN schedules media data of the XR services of a server based on the media information. In this way, the UPF and the RAN jointly participate in media data scheduling. The media information may include a sequence number of a PDU set, an indication of a last PDU in the PDU set, a sequence number of a PDU in the PDU set, a byte size of the PDU set, importance of the PDU set, and the like.

It is clear that FIG. 2 may further involve joint participation of another core network element in media data scheduling. This is not specifically limited.

As factors such as user requirements, network congestion statuses, network configurations, or subscription information change, bit rates of the application data may need to be dynamically adjusted and effectively managed and controlled with joint participation of the access network devices and the core network devices.

Based on this, in embodiments, a scenario in which an access network device and a related network element in a core network assist a UPF in dynamically adjusting and effectively managing and controlling a bit rate of application data is mainly considered. That is, in embodiments, a function of adjusting or managing and controlling an application layer bit rate may be delivered to the UPF, thereby reducing a delay of adjusting or managing and controlling the application layer bit rate.

The following uses an example in which an XR service is transmitted based on media over quick UDP internet connections (media over quick UDP internet connections, media over QUIC, MoQ for short) to describe a scenario in which a UPF needs to dynamically adjust and effectively manage and control a bit rate of application data.

MoQ is a QUIC-based media transport protocol that provides end-to-end encryption support. As shown in FIG. 3, a MoQ protocol architecture includes a client (Client), a MoQ relay node (MoQ Relay), and a server (Server). In the MoQ protocol, media transmission is performed at an object (object) granularity, and each object carries corresponding metadata (metadata) of the object. The object herein may be a video frame, and the metadata is assistance information (for example, information such as a sequence number and a priority of the object) for the object. The MoQ relay may perform forwarding, caching, discarding and other similar processing on the object based on the received metadata corresponding to the object.

To implement MoQ-based transmission of data of the XR service, the UPF needs to identify media information of the XR service; and MoQ uses end-to-end encryption. Therefore, if the UPF identifies the media information of the XR service transmitted based on MoQ, the UPF needs to serve as a MoQ relay. In this way, when the UPF serves as the MoQ relay, capabilities of the UPF may need to be enhanced in response to changes of factors such as user requirements, network congestion statuses, network configurations, or subscription information, so that the UPF has capabilities of dynamically adjusting and effectively managing and controlling the bit rate of the application data, to adapt to these changes through adjustment and management and control of the bit rate. In addition, capabilities of the access network device and another related network element in the core network that are in a communication system also need to be enhanced, to assist, through capability enhancement, the UPF in dynamically adjusting and effectively managing and controlling the bit rate of the application data.

The following embodiments describe, in the following plurality of solutions by using examples, how the access network device and the relevant core network element assist in the UPF in dynamically adjusting and effectively managing and controlling the bit rate of the application data. These solutions may be independent of each other, or may be associated with each other. Same content in different solutions may be mutually referenced. This is not specifically limited.

### [Solution 1]

In "Solution 1", in this embodiment, it is considered that a related network element in a core network may assist a UPF in obtaining bit rate authorization information delivered by an AF. In this way, the UPF may dynamically adjust and effectively manage and control, based on the bit rate authorization information delivered by the AF, bit rate information corresponding to application data, and ensure that the bit rate information corresponding to the application data is within the bit rate authorization information. In this embodiment, the bit rate authorization information is delivered to the UPF with assistance of the related gateway, so that the UPF performs authentication for bit rate authorization based on the bit rate authorization information, and dynamically adjusts and effectively manages and controls, based on the bit rate authorization information, the bit rate information corresponding to the application data, thereby reducing a delay of authentication for application layer bit rate authorization and a delay of adjusting or managing and controlling an application layer bit rate.

It should be noted that the bit rate authorization information refers to bit rate information allowed to be used by a terminal device to access an application. The following describes the bit rate authorization information in detail.

A bit rate may be a transmission bit rate of application data (such as media data, an audio, a video, or an image), and is usually measured in bits per second (bps). A higher bit rate indicates a larger data transmission amount and better quality of application data, requiring higher bandwidth and larger storage space. For example, the bit rate corresponding to the application data may be 64 kbps (kilobits per second), 128 kbps, 480 kbps, 720 kbps, 1080 kbps, 4K kbps, 1 Mbps (megabits per second), or the like.

Usually, the terminal device may register with an application server by using a registration request procedure. After the registration succeeds, the terminal device may successfully access the application server, request the application server to deliver application data, and the like. In addition, the application server records a device identifier, an account, a password, access permission, and other similar information of the terminal device.

In some examples, the bit rate authorization information may include a maximum bit rate allowed to be used by the terminal device to access the application.

This is because after the registration succeeds, the application server usually sets the maximum bit rate allowed to be used by the terminal device to access the application. In this way, in a process in which the terminal device requests the application data from the application server, the application server selects a bit rate from the maximum bit rate allowed to be used by the terminal device to access the application and a bit rate lower than the maximum bit rate, and provides the application data at the selected bit rate for the terminal device.

For example, when the application server sets the maximum bit rate allowed to be used by the terminal device to access the application to 1080 kbps, the terminal device can only use a bit rate equal to or lower than 1080 kbps. In other words, the application server can only provide application data corresponding to the maximum bit rate of 1080 kbps for the terminal device.

In addition, the application server may set the maximum bit rate based on a service that the terminal device subscribes to. Because services subscribed to by different terminal devices are different, the application server sets different maximum bit rates based on differences between the subscribed services. For example, when a terminal device has subscribed to a membership service from the application server, the application server may set a larger maximum bit rate (for example, 4K kbps) allowed to be used by the terminal device to access the application. When a terminal device subscribes to only a non-member service from the application server, the application server may set a smaller maximum bit rate (for example, 720 kbps) allowed to be used by the terminal device to access the application.

In some examples, the bit rate authorization information may include a bit rate list allowed to be used by the terminal device to access the application. The bit rate list may be a combination of a series of different bit rates.

This is because after the registration succeeds, the application server usually sets the bit rate list allowed to be used by the terminal device to access the application. In this way, in a process in which the terminal device requests the application data from the application server, the application server selects a bit rate from the bit rate list allowed to be used by the terminal device to access the application, and provides the application data at the selected bit rate for the terminal device.

In addition, the application server may set the bit rate list based on a service subscribed to by the terminal device. Because services subscribed to by different terminal devices are different, the application server sets different bit rate lists based on differences between the subscribed services. For example, when a terminal device has subscribed to a membership service from the application server, the application server may set more bit rates that can be selected from the bit rate list allowed to be used by the terminal device to access the application. When a terminal device subscribes to only a non-member service from the application server, the application server may set fewer bit rates that can be selected from the bit rate list allowed to be used by the terminal device to access the application.

In some examples, the bit rate authorization information may include bit rate information allowed to be used by the terminal device to access the application within a preset time period. The bit rate information herein may include a maximum bit rate or a bit rate list.

This is because the application server may set, based on different time periods, the bit rate information (for example, the maximum bit rate or the bit rate list) allowed to be used by the terminal device to access the application. For example, within a time period (for example, nighttime) in which a quantity of users accessing the application is smaller, because a quantity of terminal devices accessing the application server within this time period is usually smaller, bandwidth resource utilization is lower, a congestion rate presented by a network status is lower, or the like. Therefore, the application server may set a larger maximum bit rate or more bit rates that can be selected from the bit rate list allowed to be used by the terminal device to access the application within this time period. However, within a time period (for example, daytime) in which a quantity of users accessing the application is larger, because a quantity of terminal devices accessing the application server within this time period is usually larger, bandwidth resource utilization is higher, a congestion rate presented by a network status is higher, or the like. Therefore, the application server may set a smaller maximum bit rate or fewer bit rates that can be selected from the bit rate list allowed to be used by the terminal device to access the application within this time period. In this way, the bit rate information allowed to be used by the terminal device to access the application is flexibly set based on the time periods.

In some examples, the bit rate authorization information may include bit rate information allowed to be used by the terminal device to access the application within a preset location area. The bit rate information herein may include a maximum bit rate or a bit rate list.

This is because the application server may set, based on different location areas, the bit rate information (for example, the maximum bit rate or the bit rate list) allowed to be used by the terminal device to access the application. For example, within a densely populated location area (for example, a commercial district), because a quantity of terminal devices accessing the application server within this location area is usually large, bandwidth resource utilization is high, a congestion rate presented by a network status is high, or the like. Therefore, the application server may set a small maximum bit rate or a few bit rates that can be selected from the bit rate list allowed to be used by the terminal device to access the application within this location area.

The following describes, by using an example, how the related gateway in the core network assists the UPF in obtaining the bit rate authorization information delivered by the AF.

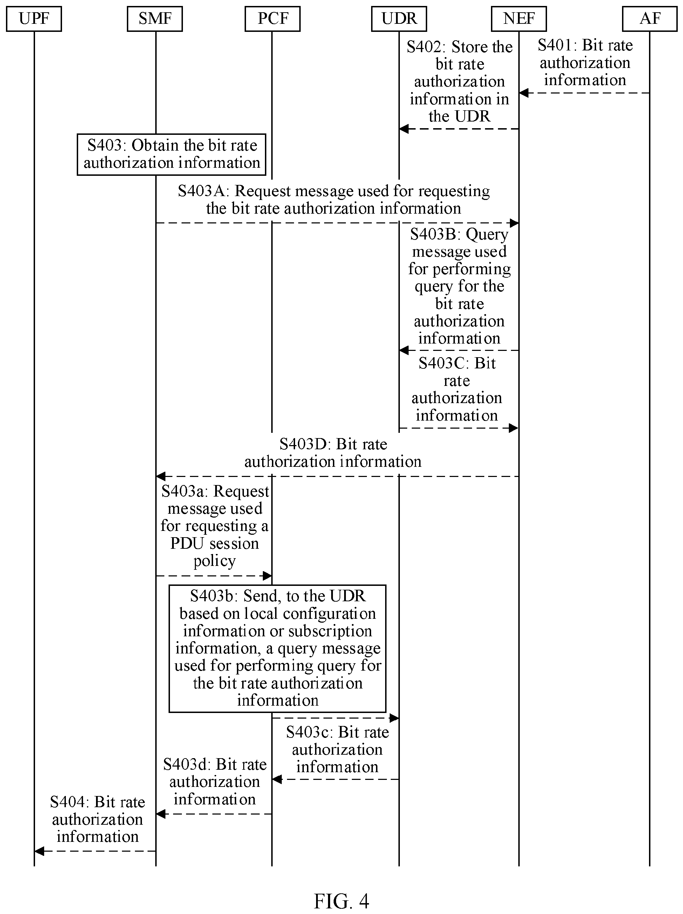

FIG. 4 is a schematic flowchart of a bit rate authorization information transmission method according to an embodiment of this application. In FIG. 4, the method specifically includes the following steps.

S401: An AF delivers bit rate authorization information to an NEF.

Correspondingly, the NEF obtains the bit rate authorization information delivered by the AF.

In this way, the NEF may be responsible for providing the bit rate authorization information for another network element.

S402: The NEF stores the bit rate authorization information in a UDR.

In this way, the UDR is specifically responsible for management, storage, and other similar processing of the bit rate authorization information.

S403: An SMF obtains the bit rate authorization information.

It should be noted that the SMF may obtain the bit rate authorization information in response to a PDU session establishment request or a PDU session modification request.

In response to the PDU session establishment request or the PDU session modification request may be understood as that after receiving the PDU session establishment/modification request, the SMF checks local configuration information or subscription information. The local configuration information or the subscription information may include indication information indicating to obtain the bit rate authorization information after the SMF receives the PDU session establishment request or the PDU session modification request. For example, the indication information may indicate that the SMF needs to obtain bit rate authorization information for a user of a specific slice or data network name (data network name, DNN). In this way, the SMF may trigger, based on the local configuration information or the subscription information, a procedure of obtaining the bit rate authorization information delivered by the AF.

In addition, the SMF may obtain the bit rate authorization information delivered by the AF in different manners. The following manners are provided herein.

Manner 1: The SMF requests, from the NEF, the bit rate authorization information delivered by the AF, the NEF queries the UDR for the bit rate authorization information delivered by the AF, the UDR returns the bit rate authorization information to the NEF, and the NEF returns the bit rate authorization information to the SMF. Specific steps are as follows.

S403A: The SMF sends, to the NEF, a request message used for requesting the bit rate authorization information.

Correspondingly, the NEF receives the request message.

The request message may be used for requesting the NEF to query the UDR for the bit rate authorization information delivered by the AF. For ease of differentiation, the request message may also be referred to as a "first request message".

S403B: The NEF sends, to the UDR, a query message used for performing query for the bit rate authorization information.

Correspondingly, the UDR receives the query message.

S403C: The UDR sends the bit rate authorization information to the NEF.

Correspondingly, the NEF receives the bit rate authorization information.

S403D: The NEF sends the bit rate authorization information to the SMF.

Correspondingly, the SMF receives the bit rate authorization information.

The bit rate authorization information may be carried in a first response message. In other words, the first response message includes the bit rate authorization information.

Manner 2: The SMF requests a PDU session policy from a PCF, the PCF may determine, based on the local configuration information or the subscription information, that the PCF needs to obtain the bit rate authorization information delivered by the AF, the PCF queries the UDR for the bit rate authorization information delivered by the AF, the UDR returns the bit rate authorization information to the PCF, and the PCF delivers the bit rate authorization information to the SMF. The local configuration information or the subscription information may include indication information indicating to obtain the bit rate authorization information after the PCF receives a PDU session policy request of the SMF. For example, the indication information may indicate that the PCF needs to obtain bit rate authorization information for a user of a specific slice or DNN. Specific steps are as follows.

S403a: The SMF sends, to the PCF, a request message used for requesting the PDU session policy.

Correspondingly, the PCF receives the request message.

The request message may be used for requesting the PCF to query the UDR for the bit rate authorization information delivered by the AF. For ease of differentiation, the request message may also be referred to as a "second request message".

S403b: The PCF sends, to the UDR based on the local configuration information or the subscription information, a query message used for performing query for the bit rate authorization information.

Correspondingly, the UDR receives the query message.

S403c: The UDR sends the bit rate authorization information to the PCF.

Correspondingly, the PCF receives the bit rate authorization information.

S403d: The PCF sends the bit rate authorization information to the SMF.

Correspondingly, the SMF receives the bit rate authorization information.

The bit rate authorization information may be carried in a second response message. In other words, the second response message includes the bit rate authorization information.

S404: The SMF sends the bit rate authorization information to a UPF.

Correspondingly, the UPF receives the bit rate authorization information.

The bit rate authorization information is carried in an N4 session establishment request message or an N4 session modification request message.

It should be noted that an N4 session establishment procedure is used for creating an initial N4 session context for a PDU session at the UPF. The SMF assigns a new N4 session ID, provides the new N4 session ID for the UPF, and sends the N4 session establishment request message to the UPF. Therefore, in the N4 session establishment procedure, the SMF may send the bit rate authorization information to the UPF by using the N4 session establishment request message, so that the UPF obtains the bit rate authorization information.

In addition, an N4 session modification procedure is used for updating an N4 session context of an existing PDU session at the UPF, and is performed between the SMF and the UPF when a PDU session-related parameter needs to be modified. The SMF sends the N4 session modification request message to the UPF. Therefore, in the N4 session establishment procedure, the SMF may send the bit rate authorization information to the UPF by using the N4 session modification request message, so that the UPF obtains the bit rate authorization information.

It can be learned from FIG. 4 that the related gateway in the core network may assist the UPF in obtaining the bit rate authorization information. Assistance operations are as follows.

The AF delivers the bit rate authorization information to the NEF, and the NEF stores, in the UDR, the bit rate authorization information delivered by the AF. After obtaining the PDU session establishment request or the PDU session modification request, the SMF obtains the bit rate authorization information from the UDR via the NEF, or the SMF obtains the bit rate authorization information from the UDR via the PCF. Finally, the SMF sends, to the UPF, the bit rate authorization information delivered by the AF.

In this way, the UPF may dynamically adjust and effectively manage and control, based on the bit rate authorization information delivered by the AF, a bit rate corresponding to the application data, and ensure that bit rate information corresponding to the application data is within the bit rate authorization information. In this embodiment, the bit rate authorization information is delivered to the UPF, so that the UPF performs authentication for application layer bit rate authorization based on the bit rate authorization information, and dynamically adjusts and effectively manages and controls, based on the bit rate authorization information, the bit rate corresponding to the application data, thereby reducing a delay of authentication for application layer bit rate authorization and the delay of adjusting or managing and controlling an application layer bit rate.

### [Solution 2]

After a UPF obtains bit rate authorization information, in "Solution 2", in this embodiment, it needs to be considered that application data is cached locally at the UPF and the UPF subscribes to the application data locally.

Specifically, for a PDU session establishment request or a PDU session modification request, the UPF may request, based on the bit rate authorization information, to subscribe to specific application data from the application server. Bit rate information corresponding to the specific application data is within the bit rate authorization information, so that the specific application data can be first cached locally. The specific application data may be application data related to the PDU session establishment request or the PDU session modification request.

This is because when a terminal device requests PDU session establishment or PDU session modification, in a procedure for requesting PDU session establishment or PDU session modification, the UPF, an SMF, and another similar network element record and maintain information such as a session context corresponding to the terminal device. In this case, the UPF may determine, based on the bit rate authorization information, bit rate information allowed to be used by the terminal device to access an application, to request, in advance based on the bit rate information allowed to be used by the terminal device to access the application, to subscribe to, from the application server, application data related to the terminal device. Bit rate information corresponding to the application data related to the terminal device is within the bit rate authorization information, and the application data related to the terminal device is cached locally in the UPF.

In this way, the UPF may directly provide, for the terminal device, the application data that is in a local cache or the application data that has been subscribed to. This avoids a case in which the application server directly delivers the application data to the terminal device, thereby reducing a delay needed for overall transmission of the application data, and reducing egress bandwidth pressure, of the application server, in a case in which the terminal device requests the application data (especially the application data at a high bit rate) from the application server.

The following describes, by using an example, that the UPF may request, based on the bit rate authorization information, to subscribe to the application data from the application server.

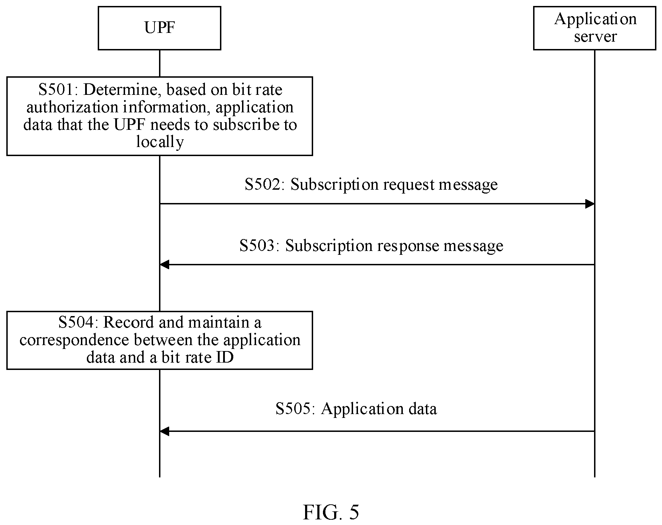

FIG. 5 is a schematic flowchart of an application data subscription method according to an embodiment of this application. In FIG. 5, the method specifically includes the following steps.

S501: A UPF determines, based on bit rate authorization information, application data that the UPF needs to subscribe to locally. Bit rate information corresponding to the application data is within bit rate authorization information.

It should be noted that the UPF needs to record and maintain a correspondence between the application data and the bit rate information, and caching the application data locally, providing the application data, and other similar processing are performed based on the correspondence.

S502: The UPF sends a subscription request message to an application server, where the subscription request message is used for requesting to subscribe to the application data.

Correspondingly, the application server receives the subscription request message.

The subscription request message may include the application data and/or the bit rate information corresponding to the application data.

In this way, the application server obtains, by using the subscription request message, the application data that the UPF needs to subscribe to and the bit rate information corresponding to the application data.

S503: The application server sends a subscription response message to the UPF, where the subscription response message may include a bit rate identifier (ID).

Correspondingly, the UPF receives the subscription response message.

In this way, the UPF may obtain the bit rate ID by using the subscription response message, for subsequently obtaining the application data based on the bit rate ID.

S504: The UPF records and maintains a correspondence between the application data and the bit rate ID.

S505: The application server sends the application data to the UPF based on the bit rate ID.

Correspondingly, the UPF receives the application data based on the bit rate ID.

It can be learned from FIG. 5 that the UPF requests, based on the bit rate authorization information, to subscribe to the application data from the application server, and the application server delivers the application data to the UPF. In addition, in a process of subscribing to the application data, the UPF needs to record and maintain the correspondence between the application data and the bit rate ID, and caching the application data locally, providing the application data, and other similar processing are performed based on the correspondence.

### [Solution 3]

After a UPF obtains bit rate authorization information, in "Solution 3", in this embodiment, it needs to be considered that a terminal device requests application data by using an application layer message, and how the UPF processes an application data request of the terminal device based on the bit rate authorization information and sends the application data to the terminal device.

It should be noted that the terminal device may request content of the application data needed by the terminal device, for example, request a video, an image, music, or another media resource. The application data request of the terminal device may be generated based on a user operation or internal logic of an application, to satisfy a user requirement and obtain the needed application data. For example, when a user selects a video to play or selects an image to view in the application, the terminal device requests application data from an application server, and after receiving the application data, the terminal device may perform corresponding processing and display, so that the user watch the video or view the image.

In addition, when requesting the application data, the terminal device may request bit rate information needed by the terminal device. For example, when selecting a video to play in the application, the user may select a bit rate of 1080 kbps for the video, or adjust a bit rate of the video from 720 kbps to 1080 kbps. In this case, the terminal device requests 1080 kbps from the application server.

After receiving the application data request of the terminal device, a RAN may forward the application data request to the UPF. After obtaining the application data request of the terminal device, the UPF may determine, based on the bit rate authorization information, bit rate information (that is, actual bit rate information) corresponding to the application data requested by the terminal device, to ensure that the actual bit rate information is within the bit rate authorization information, and then determine, based on local cache information or historical application data subscription information, whether the UPF needs to subscribe to the application data from the application server, and finally send the application data to the terminal device. When the application data is cached locally or the application data has been subscribed to locally, the UPF sends the application data to the terminal device. When the application data is cached locally or the application data has not been subscribed to locally, the UPF needs to subscribe to the application data from the application server.

It is clear that, when the terminal device requests the bit rate information corresponding to the application data, because the actual bit rate information may be different from the bit rate information requested by the terminal device, before the UPF sends the application data to the terminal device, the UFP needs to notify the terminal device of the actual bit rate information in advance.

For example, after the user selects a video to play in the application and selects a bit rate of 1080 kbps for the video, the terminal device sends the application data request information to the RAN, where the application data request information includes name information of video content requested by the terminal device and the bit rate of 1080 kbps requested by the terminal device. Then, the RAN forwards the application data request information to the UPF. It is assumed that a maximum bit rate allowed to be used by the terminal device to access the application included in the bit rate authorization information is 720 kbps. In this case, after the UPF obtains the application data request information, because the bit rate of 1080 kbps requested by the terminal device exceeds the maximum bit rate of 720 kbps allowed to be used by the terminal device, the UPF needs to adjust the bit rate of 1080 kbps requested by the terminal device to 720 kbps or lower. After determining that an actual bit rate of the video is 720 kbps, the UPF notifies the terminal device that the actual bit rate is 720 kbps, and checks whether the video content is cached locally. When the video content is cached locally, the UPF may directly send the video content to the terminal device. When the video content is not cached locally, the UPF needs to first subscribe to the video content from the application server, and then sends the video content to the terminal device.

In this way, the UPF may perform, based on the bit rate authorization information, authentication for application layer bit rate authorization on the application data requested by the terminal device, thereby reducing a delay of authentication for application layer bit rate authorization. In addition, the UPF may determine, based on a local cache status or the historical application data subscription information, whether the UPF needs to subscribe to the application data from the application server, and may provide the application data for the terminal device. This avoids a case in which the application server directly delivers the application data to the terminal device, thereby reducing a delay needed for overall transmission of the application data, and reducing egress bandwidth pressure, of the application server, in a case in which the terminal device requests the application data (especially the application data at a high bit rate) from the application server.

The following describes, by using an example, a process in which the UPF sends the application data to the terminal device based on the bit rate authorization information.

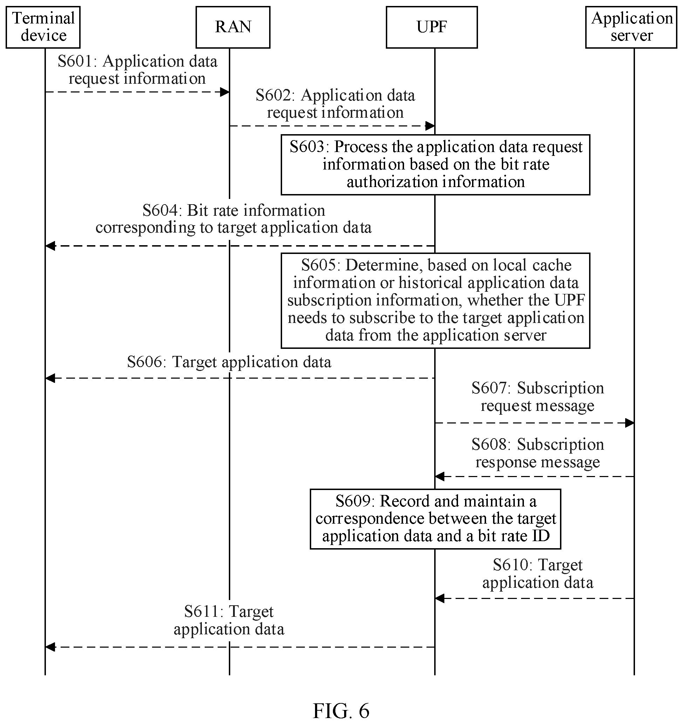

FIG. 6 is a schematic flowchart of an application data transmission method according to an embodiment of this application. In FIG. 6, the method specifically includes the following steps.

S601: A terminal device sends application data request information to a RAN.

Correspondingly, the RAN receives the application data request information.

The application data request information may include target application data requested by the terminal device and/or bit rate information requested by the terminal device.

S602: The RAN sends the application data request information to a UPF.

Correspondingly, the UPF receives the application data request information.

S603: The UPF processes the application data request information based on bit rate authorization information.

It should be noted that the UPF may process the application data request information based on the bit rate authorization information in different manners. The following manners are provided herein.

Manner a: If the application data request information includes the target application data requested by the terminal device, the UPF may determine, from the bit rate authorization information in response to the application data request information, bit rate information corresponding to the target application data. In other words, when a user does not specify a bit rate corresponding to the application data, the UPF may select a bit rate from the bit rate authorization information.

For example, after the user selects a video to play in an application, the terminal device sends the application data request information to the RAN, where the application data request information includes name information of video content requested by the terminal device. Then, the RAN forwards the application data request information to the UPF. It is assumed that a maximum bit rate allowed to be used by the terminal device to access the application included in the bit rate authorization information is 720 kbps. In this case, after obtaining the application data request information, the UPF determines that a bit rate of the video is 720 kbps.

Manner b: If the application data request information includes the target application data requested by the terminal device and the bit rate information requested by the terminal device, the UPF needs to determine, based on the bit rate authorization information, whether the bit rate information requested by the terminal device can be authorized. When the bit rate information requested by the terminal device is within the bit rate authorization information, it indicates that the bit rate information requested by the terminal device can be authorized, and the bit rate information requested by the terminal device is used as bit rate information actually corresponding to the target application data. When the bit rate information requested by the terminal device is not within the bit rate authorization information, it indicates that the bit rate information requested by the terminal device cannot be authorized, and the UPF needs to determine, from the bit rate authorization information, bit rate information actually corresponding to the target application data.

For example, after the user selects a video to play in an application and selects a bit rate of 1080 kbps for the video, the terminal device sends the application data request information to the RAN, where the application data request information includes name information of video content requested by the terminal device and the bit rate of 1080 kbps requested by the terminal device. Then, the RAN forwards the application data request information to the UPF. It is assumed that a maximum bit rate allowed to be used by the terminal device to access the application included in the bit rate authorization information is 720 kbps. In this case, after obtaining the application data request information, the UPF determines that an actual bit rate of the video is 720 kbps.

S604: The UPF sends the bit rate information corresponding to the target application data to the terminal device.

It should be noted that the UPF needs to first send the bit rate information corresponding to the target application data to the RAN, and then the RAN forwards the bit rate information to the terminal device.

S605: The UPF determines, based on local cache information or historical application data subscription information, whether the UPF needs to subscribe to the target application data from an application server.

It should be noted that, if the target application data is cached locally or the target application data has been subscribed to locally, S606 is performed. If the target application data is not cached locally or the target application data has not been subscribed to locally, S607 to S611 are performed.

S606: The UPF sends the target application data to the terminal device.

Correspondingly, the terminal device receives the target application data.

It should be noted that the UPF needs to first send the target application data to the RAN, and then the RAN forwards the target application data to the terminal device.

S607: The UPF sends a subscription request message to the application server, where the subscription request message is used for requesting to subscribe to the target application data.

The subscription request message may include the target application data and/or the bit rate information actually corresponding to the target application data.

In this way, the application server obtains, by using the subscription request message, the target application data that the UPF needs to subscribe to and the bit rate information actually corresponding to the target application data.

S608: The application server sends a subscription response message to the UPF, where the subscription response message may include a bit rate ID.

Correspondingly, the UPF receives the subscription response message.

In this way, the UPF may obtain the bit rate ID by using the subscription response message, for subsequently obtaining the target application data based on the bit rate ID.

S609: The UPF records and maintains a correspondence between the target application data and the bit rate ID.

S610: The application server sends the target application data to the UPF based on the bit rate ID.

Correspondingly, the UPF receives the target application data based on the bit rate ID.

S611: The UPF sends the target application data to the terminal device.

Correspondingly, the terminal device receives the target application data.

It should be noted that the UPF needs to first send the target application data to the RAN, and then the RAN forwards the target application data to the terminal device.

It can be learned from FIG. 6 that the terminal device may request the application data by using an application layer message, and the UPF may process the application data request of the terminal device based on the bit rate authorization information, and send the application data to the terminal device.

### [Solution 4]

In "Solution 4", in this embodiment, the foregoing "Solution 1" and "Solution 3" may be combined, so that a related gateway in a core network assists a UPF in obtaining bit rate authorization information delivered by an AF, and then the UPF processes an application data request of a terminal device based on the bit rate authorization information, and sends application data to the terminal device. The following provides example descriptions.

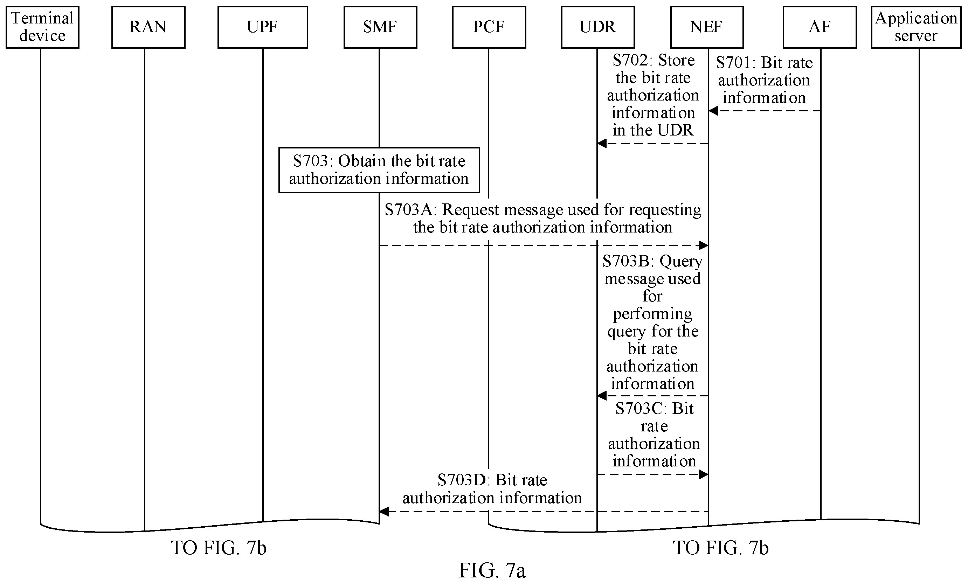

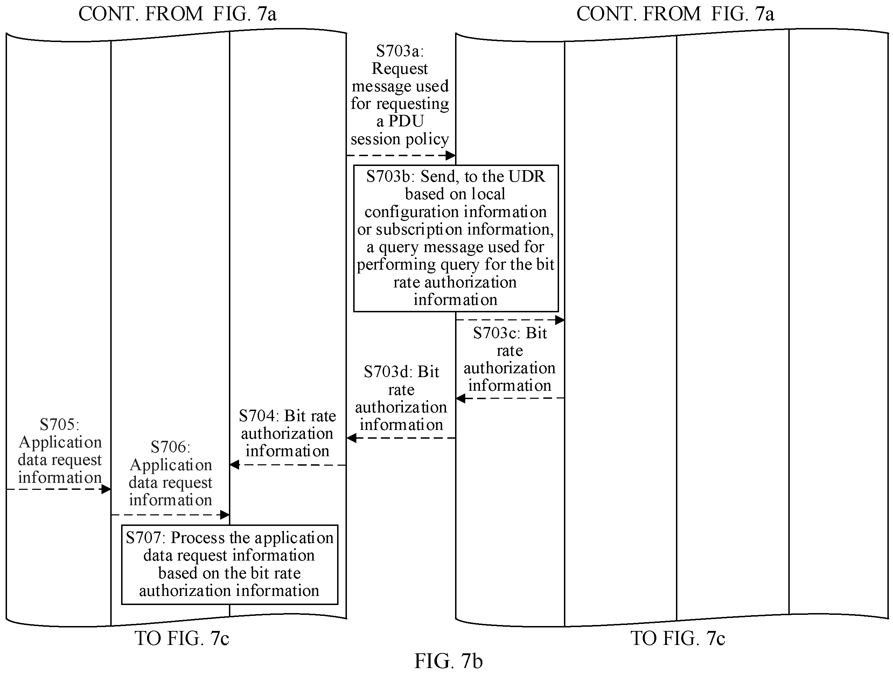

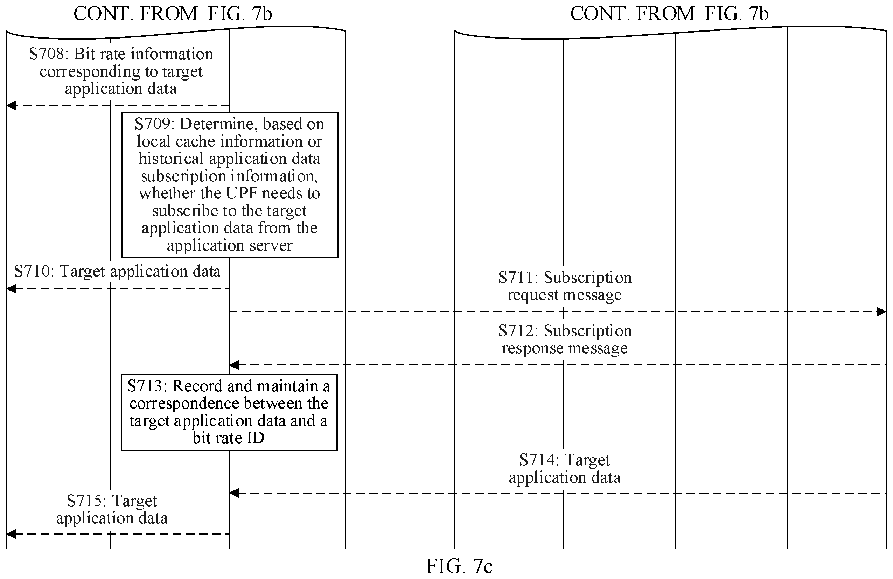

FIG. 7a to FIG. 7c are a schematic flowchart of another application data transmission method according to an embodiment of this application. In FIG. 7a to FIG. 7c, the method specifically includes the following steps.

S701: An AF delivers bit rate authorization information to an NEF.

Correspondingly, the NEF obtains the bit rate authorization information delivered by the AF.

In this way, the NEF may be responsible for providing the bit rate authorization information for another network element.

S702: The NEF stores the bit rate authorization information in a UDR.

In this way, the UDR is specifically responsible for management, storage, and other similar processing of the bit rate authorization information.

S703: An SMF obtains the bit rate authorization information.

It should be noted that the SMF may obtain the bit rate authorization information in response to a PDU session establishment request or a PDU session modification request.

In response to the PDU session establishment request or the PDU session modification request may be understood as that after receiving the PDU session establishment/modification request, the SMF checks local configuration information or subscription information. The local configuration information or the subscription information may include indication information indicating to obtain the bit rate authorization information after the SMF receives the PDU session establishment request or the PDU session modification request. For example, the indication information may indicate that the SMF needs to obtain bit rate authorization information for a user of a specific slice or data network name (data network name, DNN). In this way, the SMF may trigger, based on the local configuration information or the subscription information, a procedure of obtaining the bit rate authorization information delivered by the AF.

In addition, the SMF may obtain the bit rate authorization information delivered by the AF in different manners. The following manners are provided herein.

Manner 1: The SMF requests, from the NEF, the bit rate authorization information delivered by the AF, the NEF queries the UDR for the bit rate authorization information delivered by the AF, the UDR returns the bit rate authorization information to the NEF, and the NEF returns the bit rate authorization information to the SMF. Specific steps are as follows.

S703A: The SMF sends, to the NEF, a request message used for requesting the bit rate authorization information.

Correspondingly, the NEF receives the request message.

The request message may be used for requesting the NEF to query the UDR for the bit rate authorization information delivered by the AF. For ease of differentiation, the request message may also be referred to as a "first request message".

S703B: The NEF sends, to the UDR, a query message used for performing query for the bit rate authorization information.

Correspondingly, the UDR receives the query message.

S703C: The UDR sends the bit rate authorization information to the NEF.

Correspondingly, the NEF receives the bit rate authorization information.

S703D: The NEF sends the bit rate authorization information to the SMF.

Correspondingly, the SMF receives the bit rate authorization information.

The bit rate authorization information may be carried in a first response message. In other words, the first response message includes the bit rate authorization information.

Manner 2: The SMF requests a PDU session policy from a PCF, the PCF may determine, based on the local configuration information or the subscription information, that the PCF needs to obtain the bit rate authorization information delivered by the AF, the PCF queries the UDR for the bit rate authorization information delivered by the AF, the UDR returns the bit rate authorization information to the PCF, and the PCF delivers the bit rate authorization information to the SMF. The local configuration information or the subscription information may include indication information indicating to obtain the bit rate authorization information after the PCF receives a PDU session policy request of the SMF. For example, the indication information may indicate that the PCF needs to obtain bit rate authorization information for a user of a specific slice or DNN. Specific steps are as follows.

S703a: The SMF sends, to the PCF, a request message used for requesting the PDU session policy.

Correspondingly, the PCF receives the request message.

The request message may be used for requesting the PCF to query the UDR for the bit rate authorization information delivered by the AF. For ease of differentiation, the request message may also be referred to as a "second request message".

S703b: The PCF sends, to the UDR based on the local configuration information or the subscription information, a query message used for performing query for the bit rate authorization information.

Correspondingly, the UDR receives the query message.

S703c: The UDR sends the bit rate authorization information to the PCF.

Correspondingly, the PCF receives the bit rate authorization information.

S703d: The PCF sends the bit rate authorization information to the SMF.

Correspondingly, the SMF receives the bit rate authorization information.

The bit rate authorization information may be carried in a second response message. In other words, the second response message includes the bit rate authorization information.

S704: The SMF sends the bit rate authorization information to a UPF.

Correspondingly, the UPF receives the bit rate authorization information.

The bit rate authorization information is carried in an N4 session establishment request message or an N4 session modification request message.

S705: A terminal device sends application data request information to a RAN.

Correspondingly, the RAN receives the application data request information.

The application data request information may include target application data requested by the terminal device and/or bit rate information requested by the terminal device.

S706: The RAN sends the application data request information to the UPF.

Correspondingly, the UPF receives the application data request information.

S707: The UPF processes the application data request information based on the bit rate authorization information.

It should be noted that the UPF may process the application data request information based on the bit rate authorization information in different manners. The following manners are provided herein.

Manner a: If the application data request information includes the target application data requested by the terminal device, the UPF may determine, from the bit rate authorization information in response to the application data request information, bit rate information corresponding to the target application data. In other words, when a user does not specify a bit rate corresponding to the application data, the UPF may select a bit rate from the bit rate authorization information.

For example, after the user selects a video to play in an application, the terminal device sends the application data request information to the RAN, where the application data request information includes name information of video content requested by the terminal device. Then, the RAN forwards the application data request information to the UPF. It is assumed that a maximum bit rate allowed to be used by the terminal device to access the application included in the bit rate authorization information is 720 kbps. In this case, after obtaining the application data request information, the UPF determines that a bit rate of the video is 720 kbps.

Manner b: If the application data request information includes the target application data requested by the terminal device and the bit rate information requested by the terminal device, the UPF needs to determine, based on the bit rate authorization information, whether the bit rate information requested by the terminal device can be authorized. When the bit rate information requested by the terminal device is within the bit rate authorization information, it indicates that the bit rate information requested by the terminal device can be authorized, and the bit rate information requested by the terminal device is used as bit rate information actually corresponding to the target application data. When the bit rate information requested by the terminal device is not within the bit rate authorization information, it indicates that the bit rate information requested by the terminal device cannot be authorized, and the UPF needs to determine, from the bit rate authorization information, bit rate information actually corresponding to the target application data.

For example, after the user selects a video to play in an application and selects a bit rate of 1080 kbps for the video, the terminal device sends the application data request information to the RAN, where the application data request information includes name information of video content requested by the terminal device and the bit rate of 1080 kbps requested by the terminal device. Then, the RAN forwards the application data request information to the UPF. It is assumed that a maximum bit rate allowed to be used by the terminal device to access the application included in the bit rate authorization information is 720 kbps. In this case, after obtaining the application data request information, the UPF determines that an actual bit rate of the video is 720 kbps.

S708: The UPF sends the bit rate information corresponding to the target application data to the terminal device.

It should be noted that the UPF needs to first send the bit rate information corresponding to the target application data to the RAN, and then the RAN forwards the bit rate information to the terminal device.

S709: The UPF determines, based on local cache information or historical application data subscription information, whether the UPF needs to subscribe to the target application data from an application server.

It should be noted that, if the target application data is cached locally or the target application data has been subscribed to locally, S710 is performed. If the target application data is not cached locally or the target application data has not been subscribed to locally, S711 to S715 are performed.

S710: The UPF sends the target application data to the terminal device.

Correspondingly, the terminal device receives the target application data.

It should be noted that the UPF needs to first send the target application data to the RAN, and then the RAN forwards the target application data to the terminal device.

S711: The UPF sends a subscription request message to the application server, where the subscription request message is used for requesting to subscribe to the target application data.

The subscription request message may include the target application data and/or the bit rate information actually corresponding to the target application data.

In this way, the application server obtains, by using the subscription request message, the target application data that the UPF needs to subscribe to and the bit rate information actually corresponding to the target application data.

S712: The application server sends a subscription response message to the UPF, where the subscription response message may include a bit rate ID.

Correspondingly, the UPF receives the subscription response message.

In this way, the UPF may obtain the bit rate ID by using the subscription response message, for subsequently obtaining the target application data based on the bit rate ID.

S713: The UPF records and maintains a correspondence between the target application data and the bit rate ID.

S714: The application server sends the target application data to the UPF based on the bit rate ID.

Correspondingly, the UPF receives the target application data based on the bit rate ID.

S715: The UPF sends the target application data to the terminal device.

Correspondingly, the terminal device receives the target application data.

It should be noted that the UPF needs to first send the target application data to the RAN, and then the RAN forwards the target application data to the terminal device.

### [Solution 5]

In "Solution 3", the terminal device requests the application data by using the application layer message, and the RAN forwards the application data request of the terminal device to the UPF. However, in "Solution 5", in this embodiment, it needs to be considered that a terminal device requests application data by using a control plane message, an application data request of the terminal device is forwarded to a UPF via an AMF and an SMF, and finally, the UPF processes the application data request of the terminal device based on bit rate authorization information and then sends the application data to the terminal device.

The following embodiment describes, by using an example, only a process in which the terminal device requests the application data by using the control plane message and the application data request of the terminal device is forwarded to the UPF via the AMF and the SMF. For a process in which the UPF processes the application data request of the terminal device based on the bit rate authorization information and sends the application data to the terminal device, refer to the content in "Solution 3". Details are not described herein again.

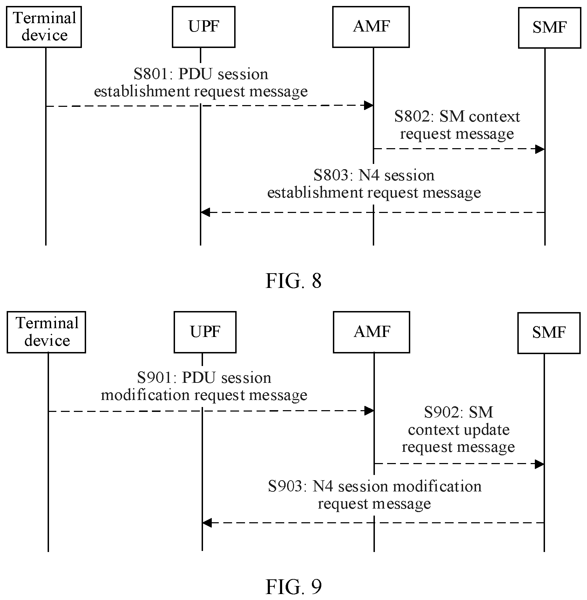

FIG. 8 is a schematic flowchart of an application data request information transmission method according to an embodiment of this application. In FIG. 8, the method specifically includes the following steps.

S801: A terminal device sends a PDU session establishment request message to an AMF. The PDU session establishment request message includes application data request information of the terminal device.

Correspondingly, the AMF receives the PDU session establishment request message.

It should be noted that the terminal device needs to first send the PDU session establishment request message to a RAN, and then the RAN forwards the PDU session establishment request message to the AMF through an N2 interface.

S802: The AMF sends a session management (SM) context request message to an SMF, where the SM context request message includes the application data request information.

Correspondingly, the SMF receives the SM context request message.

S803: The SMF sends an N4 session establishment request message to a UPF, where the N4 session establishment request message includes the application data request information.

Correspondingly, the UPF receives the N4 session establishment request message.

It can be learned from FIG. 8 that, in this embodiment, the application data request information of the terminal device may be transmitted by using a PDU session establishment procedure.

FIG. 9 is a schematic flowchart of another application data request information transmission method according to an embodiment of this application. In FIG. 9, the method specifically includes the following steps.

S901: A terminal device sends a PDU session modification request message to an AMF. The PDU session modification request message includes application data request information of the terminal device.

Correspondingly, the AMF receives the PDU session modification request message.

It should be noted that the terminal device needs to first send the PDU session modification request message to the RAN, and then the RAN forwards the PDU session modification request message to the AMF through an N2 interface.

S902: The AMF sends an SM context update request message to an SMF, where the SM context update request message includes the application data request information.

Correspondingly, the SMF receives the SM context update request message.

S903: The SMF sends an N4 session modification request message to a UPF, where the N4 session modification request message includes the application data request information.

Correspondingly, the UPF receives the N4 session modification request message.

It can be learned from FIG. 9 that, in this embodiment, the application data request information of the terminal device may be transmitted by using a PDU session modification procedure.

### [Solution 6]

After a UPF obtains bit rate authorization information, in "Solution 6", in this embodiment, it needs to be considered that the UPF determines an applicable bit rate from the bit rate authorization information based on network congestion information or bandwidth usage information reported by a RAN, or network performance analytics information reported by an NWDAF. In other words, the UPF adjusts, based on the network congestion information, the bandwidth usage information, or the network performance analytics information, bit rate information corresponding to current application data, and adjusted bit rate information is within the bit rate authorization information.

It should be noted that the network congestion information may refer to relevant data for monitoring and managing a network congestion status in a communication process between the RAN and a terminal device. When traffic in a network exceeds a processing capability of a network resource, network congestion occurs. This may result from a large quantity of users accessing the network simultaneously, excessively high data transmission requirements, insufficient network resources, or the like. Network congestion increases a delay of application data transmission, increases a packet loss rate, and deteriorates user experience.

The RAN may obtain the network congestion information in a plurality of manners. The following manners are provided herein.

Manner 1: The RAN may measure a delay of transmission of application data from the terminal device to an application server/the RAN or transmission of application data from an application server/the RAN to the terminal device. If the delay is high, it may indicate that network load is high, and congestion may occur.

Manner 2: The RAN may monitor packet loss that occurs in an application data transmission process. If a packet loss rate is high, it may indicate that network congestion occurs.

Manner 3: The RAN maintains an application data transmission queue. When network congestion occurs, a quantity of to-be-transmitted data packets in the queue increases. The RAN may infer, by monitoring a length of the queue, whether network congestion occurs.

Manner 4: The RAN may monitor and analyze a data flow that passes through the network, to know traffic distribution and changes. If traffic increases abnormally in some areas or time periods, congestion may occur.

Manner 5: The RAN may monitor quality of service (quality of service, QoS) parameters, such as a delay, a packet loss rate, and bandwidth utilization. When network congestion occurs, these parameters may exceed pre-specified thresholds. If the QoS parameters exceed the specified thresholds, the RAN determines that network congestion may occur.

In this way, after the RAN reports the network congestion information to the UPF, the UPF may determine an applicable bit rate from the bit rate authorization information based on the network congestion information. When the network congestion information reflects that network congestion occurs, because network congestion may cause a high packet loss rate, high bandwidth utilization, a high delay, or the like, the UPF may reduce a bit rate corresponding to the application data, and a reduced bit rate is also within the bit rate authorization information. In this way, bit rate adjustment is implemented.

The bandwidth usage information may refer to relevant data for recording and managing network resource usage in a communication process between a RAN and the terminal device. Bandwidth refers to a capacity of a data channel that may be used for application data transmission in a network resource, and is usually used for measuring a transmission capability of a network. The bandwidth usage information may include bandwidth utilization. The bandwidth utilization refers to a proportion of bandwidth that is currently being used in total bandwidth, and may be used for measuring utilization and load of network resources and determining whether network congestion occurs or whether a bandwidth capacity needs to be increased. Higher bandwidth utilization indicates that current network resource load is higher, and the network may slow down or network congestion may occur, affecting network usage experience of the user.

In this way, after the RAN reports the bandwidth usage information to the UPF, the UPF may determine an applicable bit rate from the bit rate authorization information based on the bandwidth usage information. When the bandwidth usage information reflects high bandwidth utilization, because the high bandwidth utilization reflects little available bandwidth, the UPF may reduce a bit rate corresponding to the application data, and a reduced bit rate is also within the bit rate authorization information. In this way, bit rate adjustment is implemented. When the bandwidth usage information reflects low bandwidth utilization, because the low bandwidth utilization reflects much available bandwidth, the UPF may increase a bit rate corresponding to the application data, and an increased bit rate is also within the bit rate authorization information. In this way, bit rate adjustment is implemented.

The network performance analytics information refers to data and events that are generated in a network communication process. The data and events may be used for evaluating and analyzing network performance and quality. The network performance analytics information may include bandwidth utilization, a transmission delay, a packet loss rate, data traffic, and the like. The NWDAF may collect and analyze the network performance analytics information, to optimize network resource allocation, improve quality of service, or reduce network costs. In addition, by collecting and analyzing information such as a delay and a packet loss rate, the NWDAF may provide more accurate network performance data for the UPF, helping the UPF determine a network congestion status and optimize resource allocation in real time to provide better quality of service.

In this way, after the NWDAF reports the network performance analytics information to the UPF, the UPF may determine an applicable bit rate from the bit rate authorization information based on the network performance analytics information. When the network performance analytics information reflects that network congestion occurs or bandwidth utilization is high, the UPF may reduce a bit rate corresponding to the application data.

In addition, because the UPF adjusts, based on the network congestion information, the bandwidth usage information, or the network performance analytics information, the bit rate information corresponding to the current application data, the UPF may determine, according to Solution 3 by using local cache information or historical application data subscription information, whether the UPF needs to subscribe to, from the application server, application data corresponding to the adjusted bit rate information, and finally send the application data to the terminal device. When the application data is cached locally or the application data has been subscribed to locally, the UPF sends the application data to the terminal device. When the application data is not cached locally or the application data has not been subscribed to locally, the UPF needs to subscribe to the application data from the application server.

It is clear that when the UPF adjusts the bit rate information corresponding to the application data, because the adjusted bit rate information is different from the original bit rate information, before sending, to the terminal device, the application data after the adjustment, the UFP needs to notify the terminal device of the adjusted bit rate information in advance.

The following describes, by using an example, a process in which the UPF sends the application data to the terminal device based on the network congestion information, the bandwidth usage information, or the network performance analytics information.

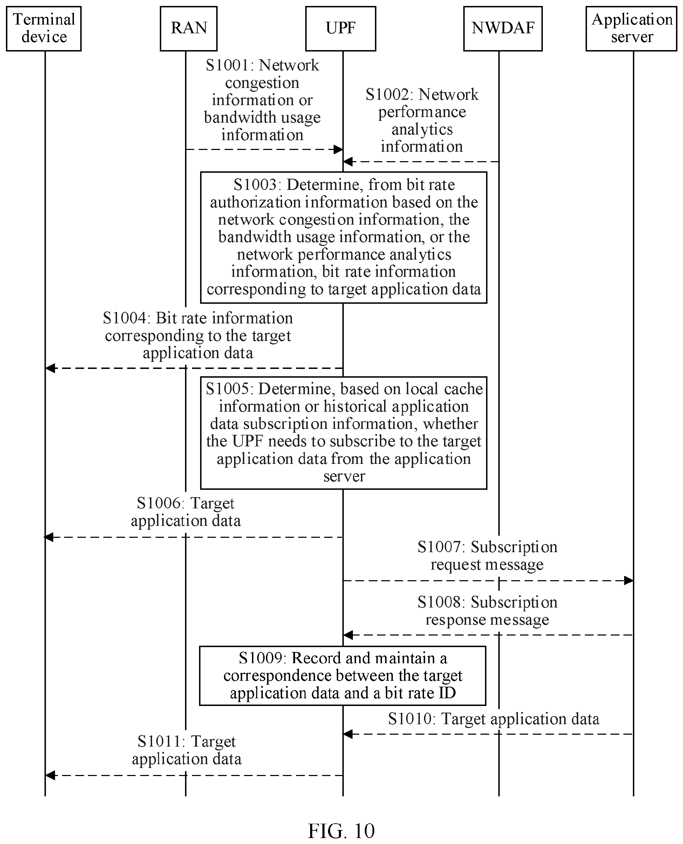

FIG. 10 is a schematic flowchart of another application data transmission method according to an embodiment of this application. In FIG. 10, the method specifically includes the following steps.

S1001: A RAN sends network congestion information or bandwidth usage information to a UPF.

Correspondingly, the UPF receives the network congestion information or the bandwidth usage information.

S1002: An NWDAF sends network performance analytics information to the UPF.

Correspondingly, the UPF receives the network performance analytics information.

S1003: The UPF determines, from bit rate authorization information based on the network congestion information, the bandwidth usage information, or the network performance analytics information, bit rate information corresponding to the target application data.

S1004: The UPF sends the bit rate information corresponding to the target application data to a terminal device.

It should be noted that the UPF needs to first send the bit rate information corresponding to the target application data to the RAN, and then the RAN forwards the bit rate information to the terminal device.

S1005: The UPF determines, based on local cache information or historical application data subscription information, whether the UPF needs to subscribe to the target application data from an application server.

It should be noted that, if the target application data is cached locally or the target application data has been subscribed to locally, S1006 is performed. If the target application data is not cached locally or the target application data has not been subscribed locally, S1007 to S1011 are performed.

S1006: The UPF sends the target application data to the terminal device.

Correspondingly, the terminal device receives the target application data.

It should be noted that the UPF needs to first send the target application data to the RAN, and then the RAN forwards the target application data to the terminal device.

S1007: The UPF sends a subscription request message to the application server, where the subscription request message is used for requesting to subscribe to the target application data.

The subscription request message may include the target application data and/or the bit rate information actually corresponding to the target application data.

In this way, the application server obtains, by using the subscription request message, the target application data that the UPF needs to subscribe to and the bit rate information corresponding to the target application data.

S1008: The application server sends a subscription response message to the UPF, where the subscription response message may include a bit rate ID.

Correspondingly, the UPF receives the subscription response message.

In this way, the UPF may obtain the bit rate ID by using the subscription response message, for subsequently obtaining the target application data based on the bit rate ID.

S1009: The UPF records and maintains a correspondence between the target application data and the bit rate ID.

S1010: The application server sends the target application data to the UPF based on the bit rate ID.

Correspondingly, the UPF receives the target application data based on the bit rate ID.

S1011: The UPF sends the target application data to the terminal device.

Correspondingly, the terminal device receives the target application data.

It should be noted that the UPF needs to first send the target application data to the RAN, and then the RAN forwards the target application data to the terminal device.

It can be learned from FIG. 10 that, the UPF adjusts, based on the network congestion information, the bandwidth usage information, or the network performance analytics information, the bit rate information corresponding to the target application data, determines, based on the local cache information or the historical application data subscription information, whether the UPF needs to subscribe to, from the application server, the target application data corresponding to the adjusted bit rate information, and finally sends the target application data to the terminal device.

### [Communication method]

Based on the foregoing content, the following describes a communication method in embodiments of this application by using an example. It should be noted that a UPF may be a chip, a chip assembly, a communication module, or the like, and an SMF may be a chip, a chip assembly, a communication module, or the like.

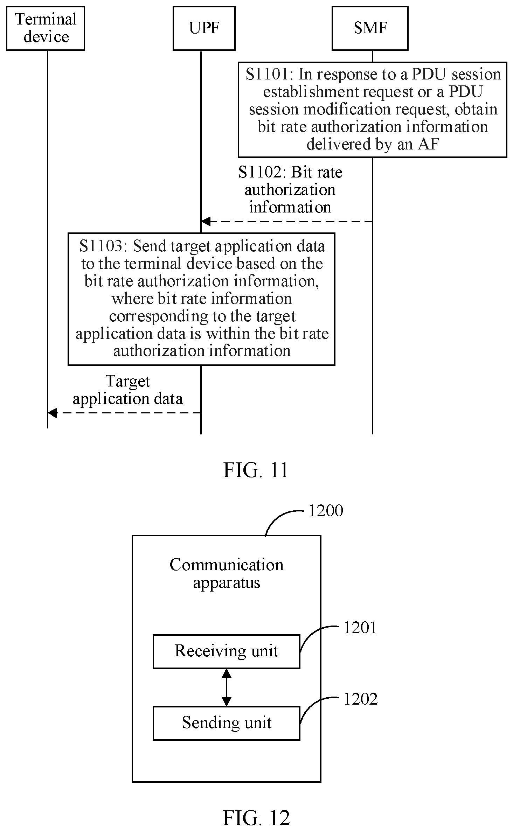

FIG. 11 is a schematic flowchart of a communication method according to an embodiment of this application. The communication method specifically includes the following steps.

S1101: In response to a PDU session establishment request or a PDU session modification request, an SMF obtains bit rate authorization information delivered by an AF.

S1102: The SMF sends the bit rate authorization information to a UPF.

Correspondingly, the UPF receives the bit rate authorization information.

S1103: The UPF sends target application data to a terminal device based on the bit rate authorization information, where bit rate information corresponding to the target application data is within the bit rate authorization information.

Correspondingly, the terminal device receives the target application data.

It can be learned that the SMF may obtain, in a procedure for requesting PDU session establishment or PDU session modification, the bit rate authorization information delivered by the AF, and then send the bit rate authorization information to the UPF. In this way, the SMF assists, in the procedure for requesting PDU session establishment or PDU session modification, the UPF in obtaining the bit rate authorization information.

In this way, the UPF may dynamically adjust and effectively manage and control, based on the bit rate authorization information delivered by the AF, the bit rate information corresponding to the target application data, and ensure that the bit rate information corresponding to the target application data is within the bit rate authorization information, so that the UPF has capabilities of dynamically adjusting and effectively managing and controlling a bit rate of application data. In addition, the bit rate authorization information is delivered to the UPF with assistance of the SMF, so that the UPF performs authentication for application layer bit rate authorization based on the bit rate authorization information, thereby reducing a delay of authentication for application layer bit rate authorization in comparison with performing authentication for application layer bit rate authorization by an application server.

In some possible examples, the bit rate authorization information includes at least one of the following: a maximum bit rate allowed to be used by the terminal device to access an application, a bit rate list allowed to be used by the terminal device to access an application, bit rate information allowed to be used by the terminal device to access an application within a preset time period, or bit rate information allowed to be used by the terminal device to access an application within a preset location area.

It should be noted that, for the maximum bit rate allowed to be used by the terminal device to access the application, after the terminal device successfully registers with the application server, the application server usually sets the maximum bit rate allowed to be used by the terminal device to access the application. In this way, in a process in which the terminal device requests the application data from the application server, the application server may select a bit rate from the maximum bit rate allowed to be used by the terminal device to access the application and a bit rate lower than the maximum bit rate, and provide the application data at the selected bit rate for the terminal device.

For the bit rate list allowed to be used by the terminal device to access the application, after the terminal device successfully registers with the application server, the application server usually sets the bit rate list allowed to be used by the terminal device to access the application. In this way, in a process in which the terminal device requests the application data from the application server, the application server may select a bit rate from the bit rate list allowed to be used by the terminal device to access the application, and provide the application data at the selected bit rate for the terminal device.

For the bit rate information allowed to be used by the terminal device to access the application within the preset time period, the application server may set, based on different time periods, the bit rate information (for example, a maximum bit rate or a bit rate list) allowed to be used by the terminal device to access the application. For example, within a time period (for example, nighttime) in which a quantity of users accessing the application is smaller, because a quantity of terminal devices accessing the application server within this time period is usually smaller, bandwidth resource utilization is lower, a congestion rate presented by a network status is lower, or the like. Therefore, the application server may set a larger maximum bit rate or more bit rates that can be selected from the bit rate list allowed to be used by the terminal device to access the application within this time period. However, within a time period (for example, daytime) in which a quantity of users accessing the application is larger, because a quantity of terminal devices accessing the application server within this time period is usually larger, bandwidth resource utilization is higher, a congestion rate presented by a network status is higher, or the like. Therefore, the application server may set a smaller maximum bit rate or fewer bit rates that can be selected from the bit rate list allowed to be used by the terminal device to access the application within this time period. In this way, the bit rate information allowed to be used by the terminal device to access the application is flexibly set based on the time periods.

For the bit rate information allowed to be used by the terminal device to access the application within the preset location area, the application server may set, based on different location areas, the bit rate information (for example, a maximum bit rate or a bit rate list) allowed to be used by the terminal device to access the application. For example, within a densely populated location area (for example, a commercial district), because a quantity of terminal devices accessing the application server within this location area is usually large, bandwidth resource utilization is high, a congestion rate presented by a network status is high, or the like. Therefore, the application server may set a small maximum bit rate or a few bit rates that can be selected from the bit rate list allowed to be used by the terminal device to access the application within this location area.

In some possible examples, the bit rate authorization information is carried in an N4 session establishment request message or an N4 session modification request message.

It should be noted that an N4 session establishment procedure is used for creating an initial N4 session context for a PDU session at the UPF. The SMF assigns a new N4 session ID, provides the new N4 session ID for the UPF, and sends the N4 session establishment request message to the UPF. Therefore, in the N4 session establishment procedure, the SMF may send the bit rate authorization information to the UPF by using the N4 session establishment request message, so that the UPF obtains the bit rate authorization information.

In addition, an N4 session modification procedure is used for updating an N4 session context of an existing PDU session at the UPF, and is performed between the SMF and the UPF when a PDU session-related parameter needs to be modified. The SMF sends the N4 session modification request message to the UPF. Therefore, in the N4 session establishment procedure, the SMF may send the bit rate authorization information to the UPF by using the N4 session modification request message, so that the UPF obtains the bit rate authorization information.

In some possible examples, before the sending the target application data bit rate authorization information to the terminal device based on the bit rate authorization information, the method further includes: obtaining application data request information of the terminal device.

It should be noted that, after the UPF obtains the bit rate authorization information, the terminal device may request content of the application data needed by the terminal device, for example, request a video, an image, music, or another media resource. The application data request of the terminal device may be generated based on a user operation or internal logic of the application, to satisfy a user requirement and obtain the needed application data. In this way, the UPF may obtain the application data request information of the terminal device.

In some possible examples, the obtaining the application data request information of the terminal device includes: receiving the application data request information of the terminal device from an access network device.

It should be noted that the terminal device may request the application data by using an application layer message, and the application data request information of the terminal device is forwarded to the UPF via a RAN, so that the UPF obtains the application data request information of the terminal device. Finally, the UPF processes the application data request information of the terminal device based on the bit rate authorization information, and sends the application data to the terminal device.

In some possible examples, the obtaining the application data request information of the terminal device includes: receiving the application data request information from the SMF.

It should be noted that the terminal device may request the application data by using a control plane message, and the application data request information of the terminal device is forwarded to the UPF via an AMF and the SMF, so that the UPF obtains the application data request information of the terminal device. Finally, the UPF processes the application data request information of the terminal device based on the bit rate authorization information, and sends the application data to the terminal device.

In some possible examples, the application data request information includes the target application data requested by the terminal device. The sending the target application data to the terminal device based on the bit rate authorization information includes:
in response to the application data request information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, where the subscription request message is used for requesting to subscribe to the target application data from the application server.

It should be noted that, if the application data request information includes the target application data requested by the terminal device, the UPF may determine, from the bit rate authorization information in response to the application data request information, the bit rate information corresponding to the target application data. In other words, when a user does not specify a bit rate corresponding to the application data, the UPF may select a bit rate from the bit rate authorization information. In this way, the UPF may perform, based on the bit rate authorization information, authentication for application layer bit rate authorization on the target application data requested by the terminal device, thereby reducing the delay of authentication for application layer bit rate authorization. In addition, the UPF may determine, based on a local cache status or historical application data subscription information, whether the UPF needs to subscribe to the application data from the application server, and may provide the target application data for the terminal device. This avoids a case in which the application server directly delivers the target application data to the terminal device, thereby reducing a delay needed for overall transmission of the target application data, and reducing egress bandwidth pressure, of the application server, in a case in which the terminal device requests the target application data (especially the target application data at a high bit rate) from the application server.

In some possible examples, the application data request information includes the target application data requested by the terminal device and bit rate information requested by the terminal device.

The sending the target application data to the terminal device based on the bit rate authorization information includes:
if the bit rate information requested by the terminal device is within the bit rate authorization information, using, as the bit rate information corresponding to the target application data, the bit rate information requested by the terminal device; or
if the bit rate information requested by the terminal device is not within the bit rate authorization information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, where the subscription request message is used for requesting to subscribe to the target application data from the application server.

It should be noted that, if the application data request information includes the target application data requested by the terminal device and the bit rate information requested by the terminal device, the UPF needs to determine, based on the bit rate authorization information, whether the bit rate information requested by the terminal device can be authorized. When the bit rate information requested by the terminal device is within the bit rate authorization information, it indicates that the bit rate information requested by the terminal device can be authorized, and the bit rate information requested by the terminal device is used as the bit rate information actually corresponding to the target application data. When the bit rate information requested by the terminal device is not within the bit rate authorization information, it indicates that the bit rate information requested by the terminal device cannot be authorized, and the UPF needs to determine, from the bit rate authorization information, the bit rate information actually corresponding to the target application data. In addition, the UPF may determine, based on a local cache status or historical application data subscription information, whether the UPF needs to subscribe to the application data from the application server, and may provide the target application data for the terminal device. This avoids a case in which the application server directly delivers the target application data to the terminal device, thereby reducing a delay needed for overall transmission of the target application data, and reducing egress bandwidth pressure, of the application server, in a case in which the terminal device requests the target application data (especially the target application data at a high bit rate) from the application server.

In some possible examples, the sending the target application data to the terminal device based on the subscription request message includes:
sending the subscription request message to the application server;
receiving the target application data from the application server; and
sending the target application data to the terminal device.

It should be noted that the UPF may send the subscription request message to the application server to request the target application data. In this way, the application server obtains, by using the subscription request message, the application data that the UPF needs to subscribe to and the bit rate information corresponding to the application data, and sends the target application data to the UPF.

In some possible examples, the receiving the target application data from the application server includes:
receiving a subscription response message from the application server, where the subscription response message includes a bit rate identifier ID;
recording and maintaining a correspondence between the target application data and the bit rate ID; and
receiving the target application data from the application server based on the bit rate ID.

It should be noted that, before sending the target application data, the application server may send the bit rate ID to the UPF, so that the UPF may record and maintain the correspondence between the target application data and the bit rate ID, and the correspondence is cached locally. Then, the application server may send the target application data based on the bit rate ID, and the UPF may receive the target application data based on the bit rate ID.

In some possible examples, before the sending the target application data to the terminal device, the method further includes:
sending the bit rate information corresponding to the target application data to the terminal device.

It should be noted that, when the terminal device does not request the bit rate information corresponding to the target application data, the UPF may determine, based on the bit rate authorization information, the bit rate information corresponding to the target application data, and then notify the terminal device of the bit rate information. When the terminal device requests the bit rate information corresponding to the target data, because the actual bit rate information determined by the UPF based on the bit rate authorization information may be different from the bit rate information requested by the terminal device, before the UPF sends the application data to the terminal device, the UFP needs to notify the terminal device of the actual bit rate information in advance.

The foregoing mainly describes the solutions in embodiments of this application from a method perspective. The following describes functional units of a communication apparatus in embodiments by using an example. It may be understood that, to implement the foregoing functions, a UPF includes corresponding hardware structures and/or software modules for performing the functions. A person skilled in the art should be easily aware that, with reference to the units and algorithm steps in the examples described in embodiments disclosed in the specification, embodiments can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments.

In embodiments of this application, the UPF may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software program module. It should be noted that, in embodiments of this application, division into the units is an example, and is merely logical function division. During actual implementation, another division manner may be used.

When an integrated unit is used, FIG. 12 is a composition block diagram of functional units of a communication apparatus according to an embodiment of this application. The communication apparatus 1200 includes a receiving unit 1201 and a sending unit 1202.

Optionally, the receiving unit 1201 may be a module unit configured to perform receiving processing on a signal, information, and the like. This is not specifically limited.

Optionally, the sending unit 1202 may be a module unit configured to perform sending processing on a signal, information, and the like. This is not specifically limited.

Optionally, the communication apparatus 1200 may further include a storage unit, configured to store computer program code or instructions executed by the communication apparatus 1200. The storage unit may be a memory.

Optionally, the communication apparatus 1200 may be a chip or a chip assembly.

Optionally, the receiving unit 1201 and the sending unit 1202 may be integrated into a same unit, or may be integrated into different units.

For example, the receiving unit 1201 and the sending unit 1202 may be integrated into a communication unit. The communication unit may be a communication interface, a transceiver, a transceiver circuit, or the like.

Optionally, the communication apparatus 1200 may further include a processing unit.

It should be noted that the processing unit may be a processor or a controller, for example, may be a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various example logical blocks, modules, and circuits described with reference to content disclosed in embodiments. The processing unit may alternatively be a combination for implementing a computing function, for example, a combination of one or more microprocessors or a combination of a DSP and a microprocessor.

Optionally, the communication apparatus 1200 is configured to perform any step or the like performed by the UPF/chip/chip assembly or the like in the foregoing method embodiments.

During specific implementation, the receiving unit 1201 and the sending unit 1202 are configured to perform any step in the foregoing method embodiments, and may optionally invoke, when performing an action, for example, sending, another unit to complete a corresponding operation. Details are described below.

The receiving unit 1201 is configured to receive bit rate authorization information from an SMF, where the bit rate authorization information refers to bit rate information allowed to be used by a terminal device to access an application.

The sending unit 1202 is configured to send target application data to the terminal device based on the bit rate authorization information, where bit rate information corresponding to the target application data is within the bit rate authorization information.

It can be learned that, in this embodiment, it is considered that the SMF assists the UPF in obtaining the bit rate authorization information delivered by an AF. In this way, the UPF may dynamically adjust and effectively manage and control, based on the bit rate authorization information delivered by the AF, the bit rate information corresponding to the target application data, and ensure that the bit rate information corresponding to the target application data is within the bit rate authorization information, so that the UPF has capabilities of dynamically adjusting and effectively managing and controlling a bit rate of application data. In addition, the bit rate authorization information is delivered to the UPF with assistance of the SMF, so that the UPF performs authentication for application layer bit rate authorization based on the bit rate authorization information, thereby reducing a delay of authentication for application layer bit rate authorization in comparison with performing authentication for application layer bit rate authorization by an application server.

It should be noted that, for specific implementation of each operation in the embodiment in FIG. 12, refer to the descriptions in the foregoing method embodiments. Details are not described herein again.

In some possible examples, the bit rate authorization information includes at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

In some possible examples, the bit rate authorization information is carried in an N4 session establishment request message or an N4 session modification request message.

In some possible examples, before the target application data bit rate authorization information is sent to the terminal device based on the bit rate authorization information, the receiving unit 1201 is further configured to obtain application data request information of the terminal device.

In some possible examples, in terms of the obtaining the application data request information of the terminal device, the receiving unit 1201 is configured to:
receive the application data request information of the terminal device from an access network device; or
receive the application data request information from the SMF.

In some possible examples, the application data request information includes the target application data requested by the terminal device; and in terms of the sending the target application data to the terminal device based on the bit rate authorization information, the sending unit 1202 is configured to:
in response to the application data request information, determine, from the bit rate authorization information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, where the subscription request message is used for requesting to subscribe to the target application data from the application server.

In some possible examples, the application data request information includes the target application data requested by the terminal device and bit rate information requested by the terminal device; and
in terms of the sending the target application data to the terminal device based on the bit rate authorization information, the sending unit 1202 is configured to:
if the bit rate information requested by the terminal device is within the bit rate authorization information, use, as the bit rate information corresponding to the target application data, the bit rate information requested by the terminal device; or
if the bit rate information requested by the terminal device is not within the bit rate authorization information, determine, from the bit rate authorization information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, where the subscription request message is used for requesting to subscribe to the target application data from the application server.

In some possible examples, in terms of the sending the target application data to the terminal device based on the subscription request message,
the sending unit 1202 is configured to send the subscription request message to the application server;
the receiving unit 1201 is configured to receive the target application data from the application server; and
the sending unit 1202 is configured to send the target application data to the terminal device.

In some possible examples, in terms of the receiving the target application data from the application server, the receiving unit 1201 is configured to:
receive a subscription response message from the application server, where the subscription response message includes a bit rate identifier ID;
record and maintain a correspondence between the target application data and the bit rate ID; and
receive the target application data from the application server based on the bit rate ID.

In some possible examples, before the target application data is sent to the terminal device, the sending unit 1202 is configured to:
send the bit rate information corresponding to the target application data to the terminal device.

The foregoing mainly describes the solutions in embodiments of this application from a method perspective. The following describes functional units of another communication apparatus in embodiments by using an example. It may be understood that, to implement the foregoing functions, an SMF includes corresponding hardware structures and/or software modules for performing the functions. A person skilled in the art should be easily aware that, with reference to the units and algorithm steps in the examples described in embodiments disclosed in the specification, embodiments can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments.

In embodiments of this application, the SMF may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software program module. It should be noted that, in embodiments of this application, division into the units is an example, and is merely logical function division. During actual implementation, another division manner may be used.

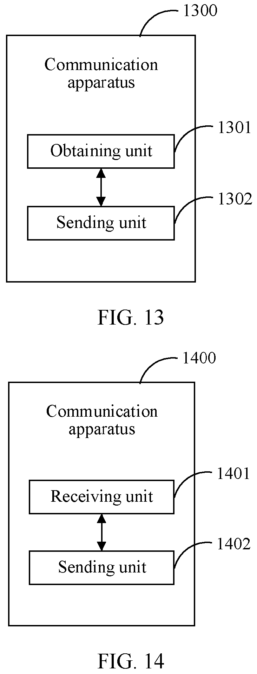

When an integrated unit is used, FIG. 13 is a composition block diagram of functional units of another communication apparatus according to an embodiment of this application. The communication apparatus 1300 includes an obtaining unit 1301 and a sending unit 1302.

Optionally, the obtaining unit 1301 may be a module unit configured to perform obtaining processing on a signal, information, and the like. This is not specifically limited herein.

Optionally, the sending unit 1302 may be a module unit configured to perform sending processing on a signal, information, and the like. This is not specifically limited.

Optionally, the communication apparatus 1300 may further include a storage unit, configured to store computer program code or instructions executed by the communication apparatus 1300. The storage unit may be a memory.

Optionally, the communication apparatus 1300 may be a chip or a chip assembly.

Optionally, the obtaining unit 1301 and the sending unit 1302 may be integrated into a communication unit. The communication unit may be a communication interface, a transceiver, a transceiver circuit, or the like.

Optionally, the communication apparatus 1300 may further include a processing unit.

It should be noted that the processing unit may be a processor or a controller, for example, may be a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various example logical blocks, modules, and circuits described with reference to content disclosed in embodiments. The processing unit may alternatively be a combination for implementing a computing function, for example, a combination of one or more microprocessors or a combination of a DSP and a microprocessor.

Optionally, the communication apparatus 1300 is configured to perform any step or the like performed by the SMF/chip/chip assembly or the like in the foregoing method embodiments.

During specific implementation, the obtaining unit 1301 and the sending unit 1302 are configured to perform any steps in the foregoing method embodiments, and may optionally invoke, when performing an action, for example, sending, another unit to complete a corresponding operation. Details are described below.

The obtaining unit 1301 is configured to: in response to a PDU session establishment request or a PDU session modification request, obtain bit rate authorization information delivered by an AF, where the bit rate authorization information refers to bit rate information allowed to be used by a terminal device to access an application.

The sending unit 1302 is configured to send the bit rate authorization information to a UPF.

It can be learned that, in this embodiment, the bit rate authorization information delivered by the AF may be obtained in a procedure for requesting PDU session establishment or PDU session modification, and then the bit rate authorization information is sent to the UPF. In this way, assisting, in the procedure for requesting PDU session establishment or PDU session modification, the UPF in obtaining the bit rate authorization information is implemented.

In some possible examples, the bit rate authorization information includes at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

In some possible examples, in terms of the obtaining the bit rate authorization information delivered by the AF,
the sending unit 1302 is configured to send a first request message to an NEF, where the first request message is used for requesting the NEF to query a UDR for the bit rate authorization information delivered by the AF; and
the obtaining unit 1301 is configured to receive a first response message from the NEF, where the first response message includes the bit rate authorization information.

In some possible examples, in terms of the obtaining the bit rate authorization information delivered by the AF,
the sending unit 1302 is configured to send a second request message to a PCF, where the second request message is used for requesting the PCF to query a UDR for the bit rate authorization information delivered by the AF; and
the obtaining unit 1301 is configured to receive a second response message from the PCF, where the second response message includes the bit rate authorization information.

In some possible examples, before the bit rate authorization information delivered by the AF is obtained, the obtaining unit 1301 is configured to:
receive a session management SM context request message or an SM context update request message from a mobility management function gateway AMF, where the SM context request message or the SM context update request message includes application data request information of the terminal device.

In some possible examples, in terms of the sending the bit rate authorization information to the UPF, the sending unit 1302 is configured to:
if the SM context request message includes the application data request information, send an N4 session establishment request message to the UPF, where the N4 session establishment request message includes the application data request information; or
if the SM context update request message includes the application data request information, send an N4 session modification request message to the UPF, where the N4 session modification request message includes the application data request information.

In some possible examples, the data request information includes target application data requested by the terminal device and/or bit rate information requested by the terminal device.

The foregoing mainly describes the solutions in embodiments of this application from a method perspective. The following describes functional units of a communication apparatus in embodiments by using an example. It may be understood that, to implement the foregoing functions, a UPF includes corresponding hardware structures and/or software modules for performing the functions. A person skilled in the art should be easily aware that, with reference to the units and algorithm steps in the examples described in embodiments disclosed in the specification, embodiments can be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of embodiments.

In embodiments of this application, the UPF may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software program module. It should be noted that, in embodiments of this application, division into the units is an example, and is merely logical function division. During actual implementation, another division manner may be used.

When an integrated unit is used, FIG. 14 is a composition block diagram of functional units of another communication apparatus according to an embodiment of this application. The communication apparatus 1400 includes a receiving unit 1401 and a sending unit 1402.

Optionally, the receiving unit 1401 may be a module unit configured to perform receiving processing on a signal, information, and the like. This is not specifically limited.

Optionally, the sending unit 1402 may be a module unit configured to perform sending processing on a signal, information, and the like. This is not specifically limited.

Optionally, the communication apparatus 1400 may further include a storage unit, configured to store computer program code or instructions executed by the communication apparatus 1400. The storage unit may be a memory.

Optionally, the communication apparatus 1400 may be a chip or a chip assembly.

Optionally, the receiving unit 1401 and the sending unit 1402 may be integrated into a same unit, or may be integrated into different units.

For example, the receiving unit 1401 and the sending unit 1402 may be integrated into a communication unit. The communication unit may be a communication interface, a transceiver, a transceiver circuit, or the like.

Optionally, the communication apparatus 1400 may further include a processing unit.

It should be noted that the processing unit may be a processor or a controller, for example, may be a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various example logical blocks, modules, and circuits described with reference to content disclosed in embodiments. The processing unit may alternatively be a combination for implementing a computing function, for example, a combination of one or more microprocessors or a combination of a DSP and a microprocessor.

Optionally, the communication apparatus 1400 is configured to perform any step or the like performed by the UPF/chip/chip assembly or the like in the foregoing method embodiments.

During specific implementation, the receiving unit 1401 and the sending unit 1402 are configured to perform any steps in the foregoing method embodiments, and may optionally invoke, when performing an action, for example, sending, another unit to complete a corresponding operation. Details are described below.

The receiving unit 1401 is configured to receive network congestion information or bandwidth usage information from an access network device, or receive network performance analytics information from an NWDAF.

The sending unit 1402 is configured to send target application data to a terminal device based on the network congestion information, the bandwidth usage information, or the network performance analytics information, where bit rate information corresponding to the target application data is within bit rate authorization information, and the bit rate authorization information refers to bit rate information allowed to be used by the terminal device to access an application.

It can be learned that, in this embodiment, bit rate information corresponding to the target application data may be adjusted based on the network congestion information, the bandwidth usage information, or the network performance analytics information, and the adjusted bit rate information is within the bit rate authorization information. Then, the target application data is sent to the terminal device. In this way, bit rate adjustment is implemented.

It should be noted that, for specific implementation of each operation in the embodiment in FIG. 14, refer to the descriptions in the foregoing method embodiments. Details are not described herein again.

In some possible examples, the bit rate authorization information includes at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

In some possible examples, in terms of the sending the target application data to the terminal device based on the network congestion information, the bandwidth usage information, or the network performance analytics information, the sending unit 1402 is configured to:
determine, from the bit rate authorization information based on the network congestion information, the bandwidth usage information, or the network performance analytics information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, where the subscription request message is used for requesting to subscribe to the target application data from an application server.

In some possible examples, in terms of the sending the target application data to the terminal device based on the subscription request message,
the sending unit 1402 is configured to send the subscription request message to the application server;
the receiving unit 1401 is configured to receive the target application data from the application server; and
the sending unit 1402 is configured to send the target application data to the terminal device.

In some possible examples, in terms of the receiving the target application data from the application server, the receiving unit 1401 is configured to:
receive a bit rate identifier ID from the application server;
record and maintain a correspondence between the target application data and the bit rate ID; and
receive the target application data from the application server based on the bit rate ID.

In some possible examples, before the target application data is sent to the terminal device, the sending unit 1402 is configured to:
send the bit rate information corresponding to the target application data to the terminal device.

In some possible examples, before the target application data is sent to the terminal device based on the network congestion information, the bandwidth usage information, or the network performance analytics information, the receiving unit 1401 is configured to:
receive the bit rate authorization information from an SMF network element.

In some possible examples, the bit rate authorization information is carried in an N4 session establishment request message or an N4 session modification request message.

The following describes a structure of a UPF in embodiments by using an example.

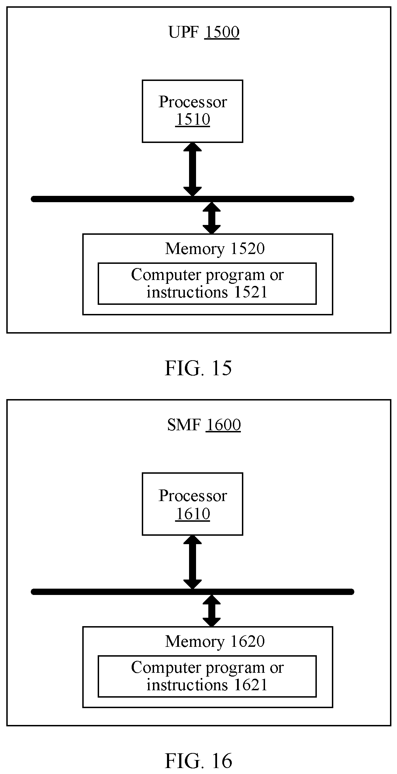

FIG. 15 is a diagram of a structure of a UPF according to an embodiment of this application. The UPF 1500 may include a processor 1510, a memory 1520, and a communication bus configured to connect the processor 1510 and the memory 1520.

Optionally, the memory 1520 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1520 is configured to store program code executed by the UPF 1500 and data transmitted by the UPF 1500.

Optionally, the UPF 1500 further includes a communication interface, configured to receive and send data.

Optionally, the UPF 1500 may be the foregoing first UPF.

Optionally, the processor 1510 may be one or more CPUs. When the processor 1510 is one CPU, the CPU may be a single-core CPU, or may be a multi-core CPU.

Optionally, the processor 1510 may be a baseband chip, a chip, a CPU, a general-purpose processor, a DSP, an ASIC, an FPGA or another programmable logic device, a transistor logic device, a hardware component, or any combination thereof.

During specific implementation, the processor 1510 in the UPF 1500 is configured to execute a computer program or instructions 1521 stored in the memory 1520, to perform the following operations:
receiving bit rate authorization information from an SMF, where the bit rate authorization information refers to bit rate information allowed to be used by a terminal device to access an application; and
sending target application data to the terminal device based on the bit rate authorization information, where bit rate information corresponding to the target application data is within the bit rate authorization information.

It can be learned that, in this embodiment, it is considered that the SMF assists the UPF in obtaining the bit rate authorization information delivered by an AF. In this way, the UPF may dynamically adjust and effectively manage and control, based on the bit rate authorization information delivered by the AF, the bit rate information corresponding to the target application data, and ensure that the bit rate information corresponding to the target application data is within the bit rate authorization information, so that the UPF has capabilities of dynamically adjusting and effectively managing and controlling a bit rate of application data. In addition, the bit rate authorization information is delivered to the UPF with assistance of the SMF, so that the UPF performs authentication for application layer bit rate authorization based on the bit rate authorization information, thereby reducing a delay of authentication for application layer bit rate authorization in comparison with performing authentication for application layer bit rate authorization by an application server.

It should be noted that, for specific implementation of each operation, corresponding descriptions of the foregoing method embodiment may be used. The UPF 1500 may be configured to perform the foregoing method embodiments in embodiments. Details are not described again.

The following describes a structure of an SMF in embodiments by using an example.

FIG. 16 is a diagram of a structure of an SMF according to an embodiment of this application. The SMF 1600 may include a processor 1610, a memory 1620, and a communication bus configured to connect the processor 1610 and the memory 1620.

Optionally, the memory 1620 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1620 is configured to store program code executed by the SMF 1600 and data transmitted by the SMF 1600.

Optionally, the SMF 1600 further includes a communication interface, configured to receive and send data.

Optionally, the SMF 1600 may be the foregoing first SMF.

Optionally, the processor 1610 may be one or more CPUs. When the processor 1610 is one CPU, the CPU may be a single-core CPU, or may be a multi-core CPU.

Optionally, the processor 1610 may be a baseband chip, a chip, a CPU, a general-purpose processor, a DSP, an ASIC, an FPGA or another programmable logic device, a transistor logic device, a hardware component, or any combination thereof.

During specific implementation, the processor 1610 in the SMF 1600 is configured to execute a computer program or instructions 1621 stored in the memory 1620, to perform the following operations:
in response to a PDU session establishment request or a PDU session modification request, obtaining bit rate authorization information delivered by an AF, where the bit rate authorization information refers to bit rate information allowed to be used by a terminal device to access an application; and
sending the bit rate authorization information to a UPF.

It can be learned that, in this embodiment, the bit rate authorization information delivered by the AF may be obtained in a procedure for requesting PDU session establishment or PDU session modification, and then the bit rate authorization information is sent to the UPF. In this way, assisting, in the procedure for requesting PDU session establishment or PDU session modification, the UPF in obtaining the bit rate authorization information is implemented.

It should be noted that, for specific implementation of each operation, corresponding descriptions of the foregoing method embodiment may be used. The SMF 1600 may be configured to perform the foregoing method embodiments in embodiments. Details are not described again.

The following describes a structure of another UPF in embodiments by using an example.

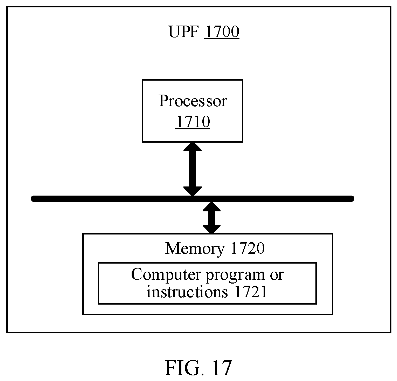

FIG. 17 is a diagram of a structure of a UPF according to an embodiment of this application. The UPF 1700 may include a processor 1710, a memory 1720, and a communication bus configured to connect the processor 1710 and the memory 1720.

Optionally, the memory 1720 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1720 is configured to store program code executed by the UPF 1700 and data transmitted by the UPF 1700.

Optionally, the UPF 1700 further includes a communication interface, configured to receive and send data.

Optionally, the UPF 1700 may be the foregoing first UPF.

Optionally, the processor 1710 may be one or more CPUs. When the processor 1710 is one CPU, the CPU may be a single-core CPU, or may be a multi-core CPU.

Optionally, the processor 1710 may be a baseband chip, a chip, a CPU, a general-purpose processor, a DSP, an ASIC, an FPGA or another programmable logic device, a transistor logic device, a hardware component, or any combination thereof.

During specific implementation, the processor 1710 in the UPF 1700 is configured to execute a computer program or instructions 1721 stored in the memory 1720, to perform the following operations:
receiving network congestion information or bandwidth usage information from an access network device, or receiving network performance analytics information from an NWDAF; and
sending target application data to a terminal device based on the network congestion information, the bandwidth usage information, or the network performance analytics information, where bit rate information corresponding to the target application data is within bit rate authorization information, and the bit rate authorization information refers to bit rate information allowed to be used by the terminal device to access an application.

It can be learned that the UPF may adjust, based on the network congestion information, the bandwidth usage information, or the network performance analytics information, bit rate information corresponding to the target application data, and the adjusted bit rate information is within the bit rate authorization information. Then, the UPF sends the target application data to the terminal device. In this way, bit rate adjustment is implemented.

It should be noted that, for specific implementation of each operation, corresponding descriptions of the foregoing method embodiment may be used. The UPF 1700 may be configured to perform the foregoing method embodiments in embodiments. Details are not described again.

The following describes other related content of embodiments by using an example.

An embodiment of this application further provides a chip, including a processor, a memory, and a computer program or instructions stored in the memory. The processor executes the computer program or the instructions to implement the steps described in the foregoing method embodiments.

An embodiment of this application further provides a chip assembly, including a transceiver component and a chip. The chip includes a processor, a memory, and a computer program or instructions stored in the memory. The processor executes the computer program or the instructions to implement the steps described in the foregoing method embodiments.

An embodiment of this application further provides a computer-readable storage medium. The computer-readable storage medium stores a computer program or instructions. When the computer program or the instructions are executed, the steps described in the foregoing method embodiments are implemented.

An embodiment of this application further provides a computer program product, including a computer program or instructions. When the computer program or the instructions are executed, the steps described in the foregoing method embodiments are implemented.

It should be noted that, for ease of description, the foregoing embodiments are all described as a combination of a series of actions. A person skilled in the art should learn that this application is not limited to the described action sequence because some steps in embodiments of this application may be performed in another sequence or simultaneously. In addition, a person skilled in the art should also learn that embodiments described in the specification are all example embodiments, and related actions, steps, modules, units, or the like are not necessarily mandatory to embodiments of this application.

In the foregoing embodiments, descriptions of each embodiment in embodiments of this application has respective focuses. For a part that is not described in detail in an embodiment, refer to related descriptions in another embodiment.

Methods or algorithm steps described in embodiments of this application may be implemented by hardware, or may be implemented by a processor by executing software instructions. The software instructions may include a corresponding software module. The software module may be stored in a RAM, a flash memory, a ROM, an EPROM, an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium, and can write information into the storage medium. It is clear that a storage medium may alternatively be a component of a processor. The processor and the storage medium may be disposed in an ASIC. In addition, the ASIC may be located in a terminal device or a management device. It is clear that the processor and the storage medium may alternatively exist in a terminal device or a management device as discrete components.

A person skilled in the art should be aware that, in one or more of the foregoing examples, all or some of the functions described in embodiments of this application may be implemented by using software, hardware, firmware, or any combination thereof. When software is used for implementation, all or some of the functions may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by the computer, or a data storage device, for example, a server or a data center, integrating one or more available media. The available medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

The modules/units included in the apparatuses and products described in the foregoing embodiments may be software modules/units, may be hardware modules/units, or may be partially software modules/units and partially hardware modules/units. For example, for each apparatus or product used in or integrated into a chip, all modules/units included in the apparatus or product may be implemented by using hardware, for example, a circuit. Alternatively, at least a part of modules/units may be implemented by using a software program. The software program is run on a processor integrated into the chip, and remaining modules/units (if any) may be implemented by using hardware, for example, a circuit. For each apparatus or product used in or integrated into a chip assembly, all modules/units included in the apparatus or product may be implemented by using hardware, for example, a circuit, and different modules/units may be located in a same component (for example, a chip or a circuit module) or different components of the chip assembly. Alternatively, at least a part of modules/units may be implemented by using a software program. The software program is run on a processor integrated into the chip assembly, and remaining modules/units (if any) may be implemented by using hardware, for example, a circuit. For each apparatus or product used in or integrated into a terminal device, all modules/units included in the apparatus or product may be implemented by using hardware, for example, a circuit, and different modules/units may be located in a same component (for example, a chip or a circuit module) or different components of the terminal device. Alternatively, at least a part of modules/units may be implemented by using a software program. The software program is run on a processor integrated into the terminal device, and remaining modules/units (if any) may be implemented by using hardware, for example, a circuit.

The objectives, technical solutions, and beneficial effects of embodiments of this application are further described in detail in the foregoing specific implementations. It should be understood that the foregoing descriptions are merely specific implementations of embodiments of this application, but are not intended to limit the protection scope of embodiments of this application. Any modification, equivalent replacement, improvement, or the like made based on the technical solutions in embodiments of this application shall fall within the protection scope of embodiments of this application.

## Claims

1. A communication method, applied to a first communication apparatus, wherein the method comprises:
receiving bit rate authorization information from a session management function SMF network element, wherein the bit rate authorization information refers to bit rate information allowed to be used by a terminal device to access an application; and
sending target application data to the terminal device based on the bit rate authorization information, wherein bit rate information corresponding to the target application data is within the bit rate authorization information.

2. The method according to claim 1, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

3. The method according to claim 1, wherein the bit rate authorization information is carried in an N4 session establishment request message or an N4 session modification request message.

4. The method according to claim 1, wherein before the sending the target application data bit rate authorization information to the terminal device based on the bit rate authorization information, the method further comprises:
obtaining application data request information of the terminal device.

5. The method according to claim 4, wherein the obtaining the application data request information of the terminal device comprises:
receiving the application data request information of the terminal device from an access network device; or
receiving the application data request information from the SMF.

6. The method according to claim 4, wherein the application data request information comprises the target application data requested by the terminal device; and
the sending the target application data to the terminal device based on the bit rate authorization information comprises:
in response to the application data request information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, wherein the subscription request message is used for requesting to subscribe to the target application data from an application server.

7. The method according to claim 4, wherein the application data request information comprises the target application data requested by the terminal device and bit rate information requested by the terminal device; and
the sending the target application data to the terminal device based on the bit rate authorization information comprises:
if the bit rate information requested by the terminal device is within the bit rate authorization information, using, as the bit rate information corresponding to the target application data, the bit rate information requested by the terminal device; or
if the bit rate information requested by the terminal device is not within the bit rate authorization information, determining, from the bit rate authorization information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, wherein the subscription request message is used for requesting to subscribe to the target application data from an application server.

8. The method according to claim 6 or 7, wherein the sending the target application data to the terminal device based on the subscription request message comprises:
sending the subscription request message to the application server;
receiving the target application data from the application server; and
sending the target application data to the terminal device.

9. The method according to claim 8, wherein the receiving the target application data from the application server comprises:
receiving a subscription response message from the application server, wherein the subscription response message comprises a bit rate identifier ID;
recording and maintaining a correspondence between the target application data and the bit rate ID; and
receiving the target application data from the application server based on the bit rate ID.

10. The method according to claim 8, wherein before the sending the target application data to the terminal device, the method further comprises:
sending the bit rate information corresponding to the target application data to the terminal device.

11. A communication method, applied to a second communication apparatus, wherein the method comprises:
in response to a protocol data unit PDU session establishment request or a PDU session modification request, obtaining bit rate authorization information delivered by an application function AF network element, wherein the bit rate authorization information refers to bit rate information allowed to be used by a terminal device to access an application; and
sending the bit rate authorization information to a user plane function UPF network element.

12. The method according to claim 11, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

13. The method according to claim 11, wherein the obtaining the bit rate authorization information delivered by the AF comprises:
sending a first request message to a network exposure function NEF network element, wherein the first request message is used for requesting the NEF to query a unified data repository UDR network element for the bit rate authorization information delivered by the AF; and
receiving a first response message from the NEF, wherein the first response message comprises the bit rate authorization information.

14. The method according to claim 12, wherein the obtaining the bit rate authorization information delivered by the AF comprises:
sending a second request message to a policy control function PCF network element, wherein the second request message is used for requesting the PCF to query a UDR for the bit rate authorization information delivered by the AF; and
receiving a second response message from the PCF, wherein the second response message comprises the bit rate authorization information.

15. The method according to any one of claims 12 to 14, wherein before the obtaining the bit rate authorization information delivered by the AF, the method further comprises:
receiving a session management SM context request message or an SM context update request message from a mobility management function gateway AMF, wherein the SM context request message or the SM context update request message comprises application data request information of the terminal device.

16. The method according to claim 15, wherein the sending the bit rate authorization information to the UPF comprises:
if the SM context request message comprises the application data request information, sending an N4 session establishment request message to the UPF, wherein the N4 session establishment request message comprises the application data request information; or
if the SM context update request message comprises the application data request information, sending an N4 session modification request message to the UPF, wherein the N4 session modification request message comprises the application data request information.

17. The method according to claim 16, wherein the data request information comprises target application data requested by the terminal device and/or bit rate information requested by the terminal device.

18. A communication method, applied to a first communication apparatus, wherein the method comprises:
receiving network congestion information or bandwidth usage information from an access network device, or receiving network performance analytics information from a network data analytics function NWDAF network element; and
sending target application data to a terminal device based on the network congestion information, the bandwidth usage information, or the network performance analytics information, wherein bit rate information corresponding to the target application data is within bit rate authorization information, and the bit rate authorization information refers to bit rate information allowed to be used by the terminal device to access an application.

19. The method according to claim 18, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

20. The method according to claim 18, wherein the sending the target application data to the terminal device based on the network congestion information, the bandwidth usage information, or the network performance analytics information comprises:
determining, from the bit rate authorization information based on the network congestion information, the bandwidth usage information, or the network performance analytics information, the bit rate information corresponding to the target application data; and
if the target application data is cached locally or the target application data has been subscribed to locally, sending the target application data to the terminal device; or
if the target application data is not cached locally or the target application data has not been subscribed to locally, sending the target application data to the terminal device based on a subscription request message, wherein the subscription request message is used for requesting to subscribe to the target application data from an application server.

21. The method according to claim 20, wherein the sending the target application data to the terminal device based on the subscription request message comprises:
sending the subscription request message to the application server;
receiving the target application data from the application server; and
sending the target application data to the terminal device.

22. The method according to claim 21, wherein the receiving the target application data from the application server comprises:
receiving a bit rate identifier ID from the application server;
recording and maintaining a correspondence between the target application data and the bit rate ID; and
receiving the target application data from the application server based on the bit rate ID.

23. The method according to claim 20 or 21, wherein before the sending the target application data to the terminal device, the method further comprises:
sending the bit rate information corresponding to the target application data to the terminal device.

24. The method according to any one of claims 18 to 23, wherein before the sending the target application data to the terminal device based on the network congestion information, the bandwidth usage information, or the network performance analytics information, the method further comprises:
receiving the bit rate authorization information from an SMF network element.

25. The method according to claim 18, wherein the bit rate authorization information is carried in an N4 session establishment request message or an N4 session modification request message.

26. A communication apparatus, comprising:
a receiving unit, configured to receive bit rate authorization information from a session management function SMF network element, wherein the bit rate authorization information refers to bit rate information allowed to be used by a terminal device to access an application; and
a sending unit, configured to send target application data to the terminal device based on the bit rate authorization information, wherein bit rate information corresponding to the target application data is within the bit rate authorization information.

27. The apparatus according to claim 26, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

28. The apparatus according to claim 26, wherein the bit rate authorization information is carried in an N4 session establishment request message or an N4 session modification request message.

29. The apparatus according to claim 26, wherein before the target application data bit rate authorization information is sent to the terminal device based on the bit rate authorization information,
the receiving unit is further configured to obtain application data request information of the terminal device.

30. The apparatus according to claim 29, wherein in terms of the obtaining the application data request information of the terminal device, the receiving unit is configured to:
receive the application data request information of the terminal device from an access network device; or
receive the application data request information from the SMF.

31. The apparatus according to claim 29, wherein the application data request information comprises the target application data requested by the terminal device; and
in terms of the sending the target application data to the terminal device based on the bit rate authorization information, the sending unit is configured to:
in response to the application data request information, determine, from the bit rate authorization information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, wherein the subscription request message is used for requesting to subscribe to the target application data from an application server.

32. The apparatus according to claim 29, wherein the application data request information comprises the target application data requested by the terminal device and bit rate information requested by the terminal device; and
in terms of the sending the target application data to the terminal device based on the bit rate authorization information, the sending unit is configured to:
if the bit rate information requested by the terminal device is within the bit rate authorization information, use, as the bit rate information corresponding to the target application data, the bit rate information requested by the terminal device; or
if the bit rate information requested by the terminal device is not within the bit rate authorization information, determine, from the bit rate authorization information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, wherein the subscription request message is used for requesting to subscribe to the target application data from an application server.

33. The apparatus according to claim 31 or 32, wherein in terms of the sending the target application data to the terminal device based on the subscription request message,
the sending unit is configured to send the subscription request message to the application server;
the receiving unit is configured to receive the target application data from the application server; and
the sending unit is further configured to send the target application data to the terminal device.

34. The apparatus according to claim 33, wherein in terms of the receiving the target application data from the application server, the receiving unit is configured to:
receive a subscription response message from the application server, wherein the subscription response message comprises a bit rate identifier ID;
record and maintain a correspondence between the target application data and the bit rate ID; and
receive the target application data from the application server based on the bit rate ID.

35. The apparatus according to claim 33, wherein before the target application data is sent to the terminal device, the sending unit is further configured to:
send the bit rate information corresponding to the target application data to the terminal device.

36. A communication apparatus, comprising:
an obtaining unit, configured to: in response to a protocol data unit PDU session establishment request or a PDU session modification request, obtain bit rate authorization information delivered by an application function AF network element, wherein the bit rate authorization information refers to bit rate information allowed to be used by a terminal device to access an application; and
a sending unit, configured to send the bit rate authorization information to a user plane function UPF network element.

37. The apparatus according to claim 36, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

38. The apparatus according to claim 36, wherein in terms of the obtaining the bit rate authorization information delivered by the AF, the obtaining unit is configured to:
send a first request message to a network exposure function NEF network element, wherein the first request message is used for requesting the NEF to query a unified data repository UDR network element for the bit rate authorization information delivered by the AF; and
receive a first response message from the NEF, wherein the first response message comprises the bit rate authorization information.

39. The apparatus according to claim 37, wherein in terms of the obtaining the bit rate authorization information delivered by the AF, the obtaining unit is configured to:
send a second request message to a policy control function PCF network element, wherein the second request message is used for requesting the PCF to query a UDR for the bit rate authorization information delivered by the AF; and
receive a second response message from the PCF, wherein the second response message comprises the bit rate authorization information.

40. The apparatus according to any one of claims 37 to 39, wherein before the bit rate authorization information delivered by the AF is obtained, the obtaining unit is further configured to:
receive a session management SM context request message or an SM context update request message from a mobility management function gateway AMF, wherein the SM context request message or the SM context update request message comprises application data request information of the terminal device.

41. The apparatus according to claim 40, wherein in terms of the sending the bit rate authorization information to the UPF, the sending unit is configured to:
if the SM context request message comprises the application data request information, send an N4 session establishment request message to the UPF, wherein the N4 session establishment request message comprises the application data request information; or
if the SM context update request message comprises the application data request information, send an N4 session modification request message to the UPF, wherein the N4 session modification request message comprises the application data request information.

42. The apparatus according to claim 41, wherein the data request information comprises target application data requested by the terminal device and/or bit rate information requested by the terminal device.

43. A communication apparatus, comprising:
a receiving unit, configured to receive network congestion information or bandwidth usage information from an access network device, or receive network performance analytics information from a network data analytics function NWDAF network element; and
a sending unit, configured to send target application data to a terminal device based on the network congestion information, the bandwidth usage information, or the network performance analytics information, wherein bit rate information corresponding to the target application data is within bit rate authorization information, and the bit rate authorization information refers to bit rate information allowed to be used by the terminal device to access an application.

44. The apparatus according to claim 43, wherein the bit rate authorization information comprises at least one of the following:
a maximum bit rate allowed to be used by the terminal device to access the application, a bit rate list allowed to be used by the terminal device to access the application, bit rate information allowed to be used by the terminal device to access the application within a preset time period, or bit rate information allowed to be used by the terminal device to access the application within a preset location area.

45. The apparatus according to claim 43, wherein in terms of the sending the target application data to the terminal device based on the network congestion information, the bandwidth usage information, or the network performance analytics information, the sending unit is configured to:
determine, from the bit rate authorization information based on the network congestion information, the bandwidth usage information, or the network performance analytics information, the bit rate information corresponding to the target application data; and
if the target application data is cached locally or the target application data has been subscribed to locally, send the target application data to the terminal device; or
if the target application data is not cached locally or the target application data has not been subscribed to locally, send the target application data to the terminal device based on a subscription request message, wherein the subscription request message is used for requesting to subscribe to the target application data from an application server.

46. The apparatus according to claim 45, wherein in terms of the sending the target application data to the terminal device based on the subscription request message,
the sending unit is configured to send the subscription request message to the application server;
the receiving unit is configured to receive the target application data from the application server; and
the sending unit is further configured to send the target application data to the terminal device.

47. The apparatus according to claim 46, wherein in terms of the receiving the target application data from the application server, the receiving unit is configured to:
receive a bit rate identifier ID from the application server;
record and maintain a correspondence between the target application data and the bit rate ID; and
receive the target application data from the application server based on the bit rate ID.

48. The apparatus according to claim 45 or 46, wherein before the target application data is sent to the terminal device, the sending unit is further configured to:
send the bit rate information corresponding to the target application data to the terminal device.

49. The apparatus according to any one of claims 43 to 48, wherein before the target application data is sent to the terminal device based on the network congestion information, the bandwidth usage information, or the network performance analytics information, the receiving unit is further configured to:
receive the bit rate authorization information from an SMF network element.

50. The apparatus according to claim 43, wherein the bit rate authorization information is carried in an N4 session establishment request message or an N4 session modification request message.

51. A user plane function UPF network element, comprising a processor, a memory, and a computer program or instructions stored in the memory, wherein the processor executes the computer program or the instructions to implement the steps of the method according to any one of claims 1 to 11 or 18 to 25.

52. A session management function SMF network element, comprising a processor, a memory, and a computer program or instructions stored in the memory, wherein the processor executes the computer program or the instructions to implement the steps of the method according to any one of claims 12 to 17.

53. A chip, comprising a processor, wherein the processor performs the steps of the method according to any one of claims 1 to 25.

54. A computer-readable storage medium, wherein the computer-readable storage medium stores a computer program or instructions; and when the computer program or the instructions are executed, the steps of the method according to any one of claims 1 to 25 are performed.

55. A computer program product, comprising a computer program or instructions, wherein when the computer program or the instructions are executed, the steps of the method according to any one of claims 1 to 25 are performed.
